# EUROPEAN PATENT SPECIFICATION

(11) **EP 4 197 769 B1**
(45) Date of publication and mention of the grant of the patent: **06.11.2024**
(21) Application number: 22212272.3
(22) Date of filing: 08.12.2022
(51) Int. Cl.: B29D 30/00, B29D 30/52

(54) **TIRE AND SYSTEM FOR TIRE TREAD WEAR SENSING AND ELECTROSTATIC DISCHARGE**
REIFEN UND SYSTEM ZUR REIFENLAUFFLÄCHENVERSCHLEISSMESSUNG UND ELEKTROSTATISCHEN ENTLADUNG
PNEU ET SYSTÈME DE DÉTECTION D'USURE DE BANDE DE ROULEMENT DE PNEU ET DE DÉCHARGE ÉLECTROSTATIQUE

(30) Priority: 15.12.2021 US 202163289670 P; 29.11.2022 US 202218059563
(43) Date of publication of application: 21.06.2023
(73) Proprietor: The Goodyear Tire & Rubber Company, Akron, OH 44316 (US)
(72) Inventor: ZHAO, Junling, Hudson 44236 (US); BOROWCZAK, Marc, Hartville 44632 (US); SUH, Peter Jung-min, Stow 44224 (US); WEST, Jeffrey McKay, Uniontown 44685 (US); GILLICK, James Gregory, Akron 44313 (US); KESTNER, Michael William, Canton 44708 (US)
(74) Representative: Kutsch, Bernd

(56) References cited:
- EP-A1- 3 632 667
- EP-A2- 1 792 720
- KR-B1- 102 124 829

## Description

### Background of the Invention

In the manufacture of a pneumatic tire, the tire is typically built on the drum of a tire-building machine, which is known in the art as a tire building drum. Numerous tire components are wrapped and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

The use of tread wear indicators that are formed on a tire tread before or after curing is known in the art. For example, prior art mechanical tread wear indicators include color indicia disposed below certain tread elements, tie bars disposed in the tread grooves, or characters formed in the tread elements, all of which provide a visual indicator of wear. Such mechanical indicators may be difficult for a vehicle operator to see, and thus do not easily provide information to the operator.

In addition, it is often desirable to collect electronic data for the wear state of the tire. The data can be communicated to electronic systems of the vehicle, such as vehicle stability and/or braking systems, in order to provide improved control of the vehicle and to monitor or track driving behavior. Mechanical tread wear indicators are not able to provide such data to electronic systems of the vehicle.

To provide an indication of tire wear to vehicle electronic systems, prior art indirect wear estimation techniques were developed. Such techniques involve estimation of tire wear through certain tire and vehicle parameters, rather than direct measurement of wear. For example, tire pressure, tire temperature, vehicle speed, vehicle mileage, vehicle acceleration and other parameters may be employed to estimate tire wear. Such indirect estimation of tire wear can be difficult to perform accurately, and typically involves complex modeling techniques.

In order to provide a wear indication to vehicle electronic systems based on a direct measurement of tire wear, prior art electronic wear sensors were developed. Such sensors are known in the art as direct wear sensors, as they attempt to directly measure tire wear, rather than providing an estimate from indirect means. By way of example, prior art direct wear sensors include resistance-based electronic sensors that typically are incorporated into tread elements of tires. As the tread element wears, resistors in the sensor also wear, leading to a change in the electrical resistance of the sensor. By measuring the resistance of the sensor and transmitting the measured resistance data to a processor, wear of the tread can be determined.

While prior art direct wear sensors are acceptable for their intended purpose, many such sensors are difficult to install in the tire. Other direct wear sensors cannot withstand the harsh operating environment of the tire for a prolonged period, such as the recommended life of the tire. Still other direct wear sensors are not capable of maintaining precise and repeatable indication of tire wear over the recommended life of the tire.

Patent document EP 1 792 720 A2 discloses a tyre having similar features to those of the preamble of independent claim 1.

### Summary of the Invention

The invention relates to a tire in accordance with claim 1 and to a system in accordance with claim 15.

Dependent claims refer to preferred embodiments of the invention.

In preferred embodiments of the invention, the predefined depth with respect to the outer surface of the tread element corresponds to a predefined minimum tread depth of the tire.

In preferred embodiments of the invention, the channel is positioned on an equatorial plane of the tire.

In a first aspect of the invention, a tire is disclosed comprising a plurality of sidewalls, each one of the sidewalls extending radially outwardly from a respective bead to a tread, the tread comprising a plurality of tread elements; and a tire component positioned in the tire adjacent to the tread and a chimney extending from the tire component through at least one tread element, wherein the tire component and the chimney comprise a rubber composition having an uncured or cured electrical resistance at 23°C less than 10 KΩ when formed into a wire 254 millimeters long and 2 millimeters in diameter.

In a second aspect of the invention, a tire is disclosed comprising a plurality of sidewalls, each one of the sidewalls extending radially outwardly from a respective bead to a tread, the tread comprising a plurality of tread elements; and a channel extending from a conductive component of the tire to an outer surface of one of the tread elements and a conductive insert positioned in the channel, wherein a radially outermost surface of the conductive insert is flush with an outer surface of the tread element, and wherein the conductive insert is constructed of a conductive rubber composition having an uncured or cured electrical resistance at 23°C less than 10 KΩ when formed into a wire 254 millimeters long and 2 millimeters in diameter.

In a third aspect of the invention, a tire is disclosed comprising a plurality of sidewalls, each one of the sidewalls extending radially outwardly from a respective bead to a tread, the tread comprising a plurality of tread elements; and a conductive component in the tire, the conductive component being positioned radially inward relative to an outer surface of the tread, and one or a plurality of conductive inserts, wherein individual ones of the one or more conductive inserts contact the conductive component of the tire and extend to an outer surface of at least one of the tread elements, and wherein the conductive insert is constructed of a conductive rubber composition having an uncured or cured electrical resistance at 23°C less than 10 KΩ when formed into a wire 254 millimeters long and 2 millimeters in diameter.

In a fourth aspect of the invention, a tire is disclosed comprising a plurality of sidewalls, each one of the sidewalls extending radially outwardly from a respective bead to a tread, the tread comprising a plurality of tread elements; and a channel extending from an inside surface of the tire through at least a portion of one of the tread elements and a tread wear plug including a shaft positioned in the channel, wherein a flange extends from a radially innermost end of the shaft; and a conductor embedded in the shaft, the conductor having a pair of ends terminating into a corresponding pair of sensor contacts in the flange, a radially outermost portion of the conductor being positioned at a predefined depth with respect to an outer surface of the tread element, the conductor comprising a conductive rubber composition having an uncured or cured electrical resistance at 23°C less than 10 KΩ when formed into a wire 254 millimeters long and 2 millimeters in diameter and/or the conductor being constructed from carbon fiber;

In yet another aspect of the invention, a tire tread wear depth sensing system is disclosed, the system comprising a tread wear plug including a shaft configured to be inserted in a channel extending from an inside surface of a tire through at least a portion of one of a plurality of tread elements of the tire, and a conductor embedded in the shaft, the conductor having a pair of ends terminating into a corresponding pair of sensor contacts in a flange positioned at a first end of the shaft, wherein a portion of the conductor is positioned in the shaft at a predefined distance from a second end of the shaft such that the portion of the conductor is disposed in a sacrificial portion of the tread element of the tire when the shaft is fully inserted into the channel, the conductor comprising a conductive rubber composition having an uncured or cured electrical resistance at 23°C less than 10 KΩ when formed into a wire 254 millimeters long and 2 millimeters in diameter.

### Brief Description of the Drawings

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of a vehicle with one or more tires that include a tread wear sensor plug according to various embodiments of the present disclosure.
FIG. 2 is a perspective cross-sectional view of a tire shown in FIG. 1, prior to installation of the tread wear sensor plug according to various embodiments of the present disclosure.
FIG. 3 is an enlarged schematic perspective view of a tire shown in FIG. 2 according to various embodiments of the present disclosure.
FIG. 4 is a perspective view of a TPMS sensor employed in the exemplary embodiment of the tire with a tread wear sensor plug if FIG. 2 according to various embodiments of the present disclosure.
FIG. 5 is a cross-sectional view of the tread wear plug employed in the exemplary embodiment of the tire with a tread wear sensor plug of FIG. 2 according to various embodiments of the present disclosure.
FIG. 6 is a cross-sectional perspective view of the tread wear plug shown in FIG. 5 installed in the tire shown in FIG. 2 according to various embodiments of the present disclosure.
FIG. 7 is a cross-sectional perspective view of the tread wear plug shown in FIG. 5 installed in the tire shown in FIG. 2, with the tire in an unworn state according to various embodiments of the present disclosure.
FIG. 8 is a cross-sectional perspective view of the tread wear plug shown in FIG. 5 installed in the tire shown in FIG. 2, with the tire in a worn state according to various embodiments of the present disclosure.
FIG. 9 is a partial cross-sectional perspective view of a portion of a tire of FIG. 1 including a chimney according to various embodiments of the present disclosure.
FIG. 10 is an example of a side cross-sectional view of the tire of FIG. 9 according to various embodiments of the present disclosure.
FIG. 11 is a partial cross-sectional perspective view of a portion of a tire of FIG. 1 including a conductive insert according to various embodiments of the present disclosure.
FIG. 12 is an example of a side cross-sectional view of the tire of FIG. 11 according to various embodiments of the present disclosure.
FIG. 13 is a partial cross-sectional perspective view of a portion of a tire of FIG. 1 including a tread wear sensor plug according to various embodiments of the present disclosure.
FIG. 14 is another partial cross-sectional perspective view of a portion of a tire of FIG. 1 including a tread wear sensor plug according to various embodiments of the present disclosure.
FIGS. 15A-C depict various views of a further example of a tread wear sensor plug that includes electrostatic discharge section to be installed in the tire of FIG. 1 according to various embodiments of the present disclosure.

### Definitions

"Axial" and "axially" mean lines or directions that are parallel to the axis of rotation of the tire.

"CAN bus" is an abbreviation for controller area network.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact created by the tire tread with a flat surface, such as the ground, as the tire rotates or rolls.

"Lateral" means an axial direction.

"Lateral edges" means a line tangent to the axially outermost tread contact patch or footprint as measured under normal load and tire inflation, the lines being parallel to the equatorial centerplane.

"Radial" and "radially" mean lines or directions that are perpendicular to the axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used in the specification and the appended claims, the singular forms "a," "an" and "the" include plural referents unless the context clearly dictates otherwise. Thus, for example, reference to "a conductive carbon compound," "a rubber component," or "an oil," include, but are not limited to, mixtures or combinations of two or more such conductive carbon compounds, rubber components, or oils.

It should be noted that ratios, concentrations, amounts, and other numerical data can be expressed herein in a range format. It will be further understood that the endpoints of each of the ranges are significant both in relation to the other endpoint, and independently of the other endpoint. It is also understood that there are a number of values disclosed herein.

As used herein, the term "effective amount" refers to an amount that is sufficient to achieve the desired modification of a physical property of the composition or material. For example, an "effective amount" of a conductive carbon compound refers to an amount that is sufficient to achieve the desired improvement in the property modulated by the formulation component, e.g., achieving the desired level of resistivity. The specific level in terms of wt% in a composition required as an effective amount will depend upon a variety of factors including the amount and type of rubber component, molecular weight of the rubber component, form and dimensions of the conductive carbon compound, and end use of any articles made using the conductive rubber compositions.

"Electrical resistance" refers to how strongly a material, such as a conductive rubber, can oppose the flow of electric current. A material with a high electrical resistance is a better insulator, while a material with a low electrical resistance is a better conductor. Resistance can be measured using a standard meter such as, for examples, a FLUKE 117 true rms multimeter.

"Elongation at break" refers to the percentage of the original length of a rubber or elastomeric material to which the material is extended at rupture, when the material is subjected to a stretching or tensile force.

"Fiber" is a unit of matter, either natural or man-made that forms the basic element of filament, characterized by having a length at least 10 times its diameter or width.

"Modulus" refers to the tensile force at a specific elongation value (e.g. 10% modulus, 50% modulus, and the like) when a rubber or elastomeric material is subjected to a stretching or tensile motion.

"Mooney viscosity" refers to the shearing torque resisting rotation of a cylindrical metal disk or rotor embedded in rubber within a cylindrical cavity and is reported in arbitrary Mooney units. The procedure for determining Mooney viscosity can be found in standard test method ASTM D 1646.

"Phr" means parts by weight of a respective material per 100 parts by weight of rubber or elastomer.

"Storage modulus (G')" is a measurement of the stored deformation energy in an elastic manner in a viscoelastic material. In some aspects, a material having a higher degree of crosslinking will have a greater storage modulus.

"T25" refers to the curing time a rubber composition requires to reach 25% of ultimate elastic torque and is expressed in minutes with reference to a given temperature. "T90," meanwhile, is the time a rubber composition requires to reach 90% of ultimate elastic torque value. T25 and T90 can measured using a moving die rheometer and/or a rubber process analyzer.

"Zwick rebound" refers to a test of material elasticity. In this test, a force is applied to a material. A material that is perfectly elastic stores energy from this force and releases it when the force is removed. A material that is perfectly plastic absorbs the supplied energy. Rubber materials will typically have a Zwick rebound value reflecting degrees of plasticity and elasticity, and Zwick rebound values typically vary with temperature.

"Oil absorption number" as used herein refers to the number of cubic centimeters or mL of dibutyl phthalate (DBP) or paraffin oil absorbed by 100 g of carbon black under a standard set of conditions.

Unless otherwise specified, pressures referred to herein are based on atmospheric pressure (i.e., one atmosphere).

### Detailed Description of Preferred Embodiments of the Invention

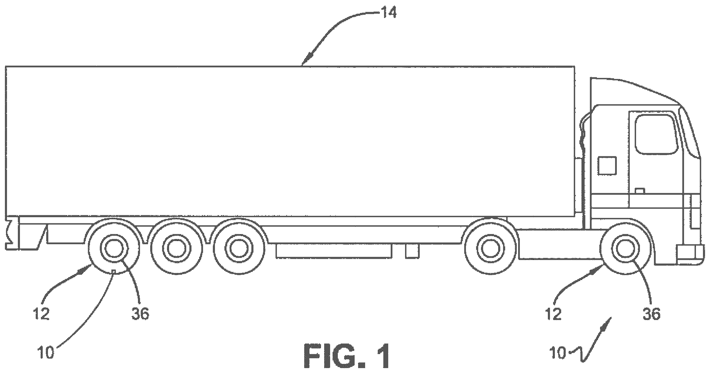

With particular reference to FIG. 1, the tire with a tread wear sensor plug 10 in a tire 12 is shown that provides a system for indicating the wear on the tire 12 supporting a vehicle 14. According to various embodiments, each one of the tires 12 on the vehicle 14 may include one or more of the tread wear sensor plugs 10. While the vehicle 14 is depicted as a commercial truck, the present disclosure is not to be so restricted. To this end, the vehicle 14 may comprise other vehicles falling into various categories such as passenger vehicles, off-the-road vehicles and the like, in which such vehicles are supported by more or fewer tires than shown in FIG. 1.

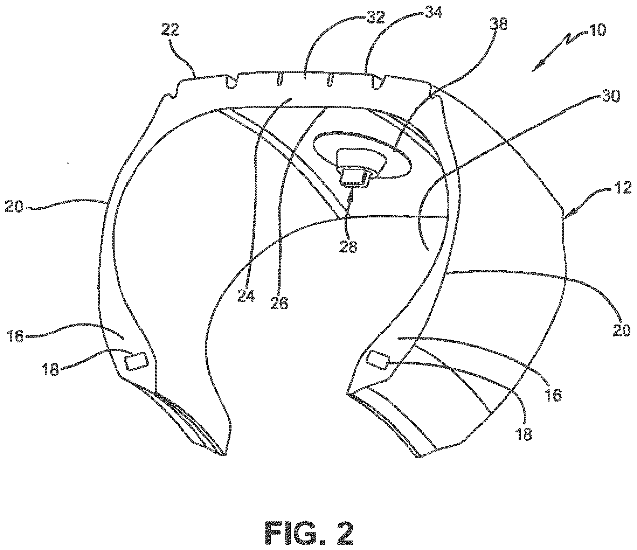

Turning to FIG. 2, shown is a cross sectional view of the tire 12 according to various embodiments. The tire 12 includes a pair of bead areas 16, each one of which is formed with a bead core 18 that is embedded in the respective bead areas. Each one of a pair of sidewalls 20 extends radially outwardly from a respective bead area 16 to a ground-contacting tread 22. The tread 22 is formed with multiple tread elements or tread blocks 32 and defines a radially outer surface 34. The tire 12 is reinforced by a carcass 24 that toroidally extends from one bead area 16 to the other bead area. An innerliner 26 is formed on the inner or inside surface of the carcass 24. The tire 12 is mounted on the flange of a wheel or rim 36 (FIG. 1) forming an internal cavity 30.

According to one embodiment, a sensor unit 28 is mounted to the tire 12. The sensor unit 28 detects certain real-time parameters of the tire 12, and preferably includes a pressure sensor to sense the inflation pressure within a cavity 30 of the tire 12, and a temperature sensor to sense the temperature of the tire 12 and/or the temperature in the cavity 30 of the tire 12. The sensor unit 28 may be a commercially-available tire pressure monitoring system (TPMS) module or sensing unit.

The sensor unit 28 comprises a processor and memory to store tire identification (ID) information for each specific tire 12. For example, the tire ID may include manufacturing information for the tire 12, including the tire model; size information, such as rim size, width, and outer diameter; manufacturing location; manufacturing date; a treadcap code that includes or correlates to a compound identification; a mold code that includes or correlates to a tread structure identification, or other information. The tire ID may also include a service history or other information to identify specific features and parameters of each tire 12.

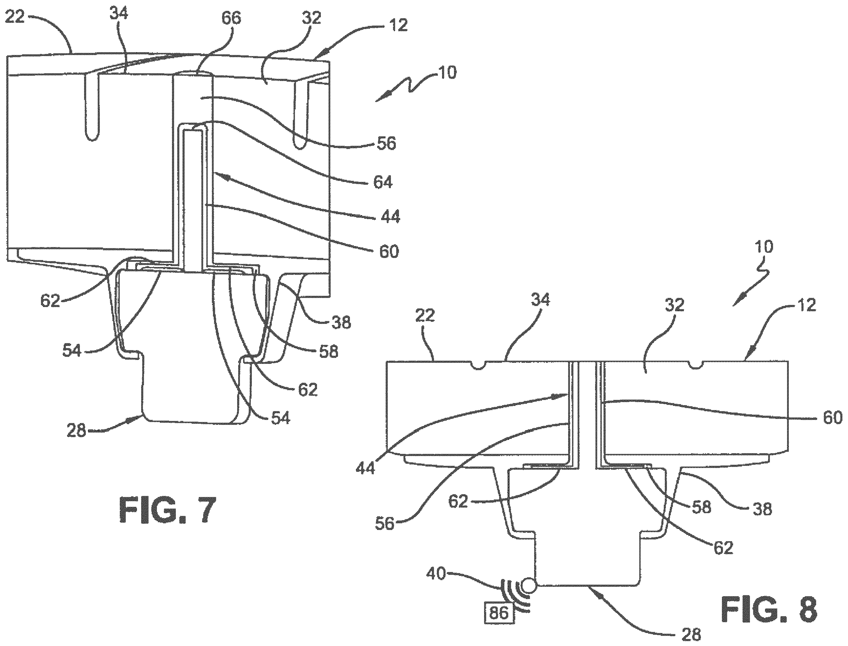

The sensor unit 28 further includes an antenna for wirelessly transmitting 40 (FIG. 8) measured parameters and tire ID data to a remote processor for analysis, such as a processor integrated into a vehicle electronic control unit and/or a Controller Area Network (CAN) bus associated with the vehicle 14 (FIG. 1).

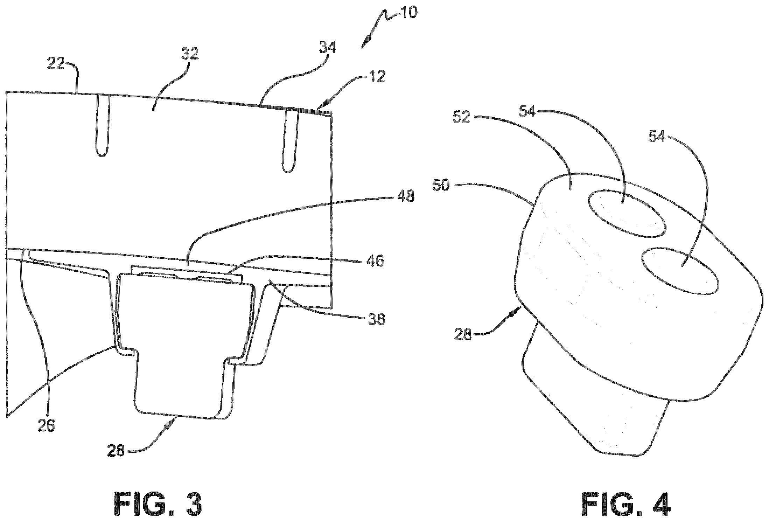

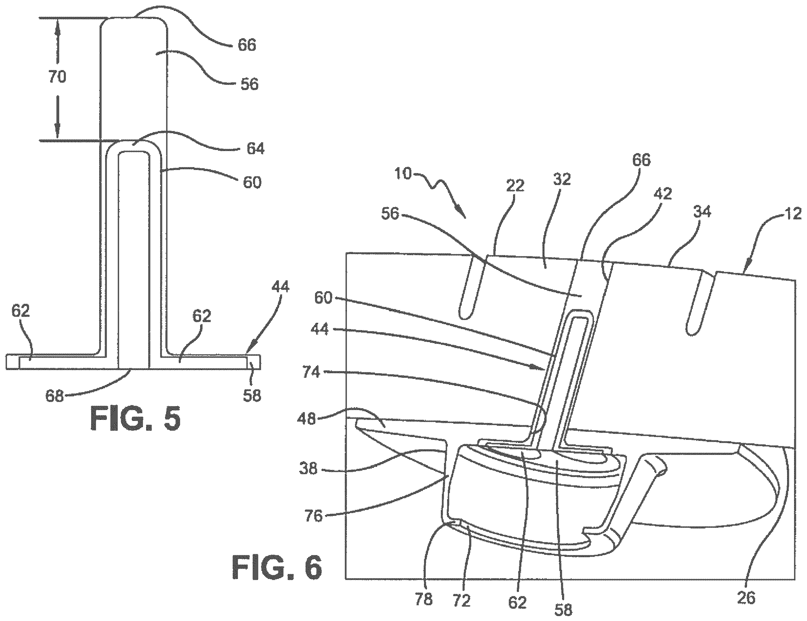

Turning to FIG. 3, the sensor unit 28 may be mounted to the tire 12 using a container 38, which receives the sensor unit 28 and is attached to the innerliner 26 by an adhesive, although the sensor unit 28 may be attached in some other manner or may be integrally molded as part of the innerliner 26 of the tire 12. Preferably, the container 38 is flexible and is formed of an elastomer or polymer. The sensor unit 28 may be attached to the tire 12 before a channel 42 (FIG. 6) for a tread wear sensor plug 44 (FIG. 5) is formed in a selected tread element 32. In such a case, a removable spacer 46 preferably is disposed between the sensor unit 28 and a base 48 of the container 38, which seats against the innerliner 26. The spacer 46 enables insertion of the tread wear plug 44, as will be described in greater detail below. As shown in FIG. 4, the sensor unit 28 includes a rigid housing 50 formed with a base 52. A pair of electrical contacts 54 are mounted on the base 52 and extend through the housing 50.

Referring to FIG. 5, the tread wear plug 44 includes a shaft 56 and a flange 58. According to one embodiment, the shaft 56 is cylindrical in shape although a cross section of the shaft 56 may be rectangular, hexagonal, octagonal, triangular, or any other shape or form. The flange 58 extends outwardly from an end of the shaft 56 to provide a base for the tread wear plug 44. A conductive wire 60 is disposed in the tread wear plug 44. The wire 60 preferably is an insulated wire, but may be an uninsulated wire, depending on particular design considerations. The wire is formed in a U-shape and thus has proximal ends 62 in the flange 58 and a distal end 64 near a radially outer surface 66 of the shaft 56. The proximal ends 62 of the wire 60 extend to contacts at a bottom 68 or exposed end of the flange 58 and allow the tread wear plug 44 to contact the electrical contacts 54 (FIG. 4) of the sensor unit 28, as will be described below. The distal end 64 of the wire 60 is a set distance 70 below the radially outer surface 66 of the shaft 56.

According to one embodiment, an elastomeric connector may be positioned between the proximal ends 62 of the wire 60 and the electrical contacts 54 to ensure a reliable electrical connection therebetween over time. Such elastomeric connectors are generally commercially available. Alternatively, an elastomeric connector may be employed to electrically couple some other electrical contacts associated with the sensor unit 28 other than the electrical contacts 54 to the proximal ends 62. For example, various points on a circuit board that makes up part of the sensor unit 28 may be electrically coupled to the proximal ends 62 by way of an elastomeric connector. Such elastomeric connector may be compressed between various electrical contact points regardless of the material from which such electrical contact points are constructed. For example, the materials may comprise metal, carbon fiber, conductive rubber compositions, or other materials. In the case of carbon fiber, the analytical estimation of electrical resistance is noted in the graph below.

| | Plain Carbon Fiber | Nickel-coated Carbon Fiber |
|---|---|---|
| Individual Carbon Fiber | 300-600 Ω/mm | 6 Ω/mm |
| Bundle or composite (1,000 filaments) | 0.3-0.6 Ω/mm | 6 mΩ/mm |
| Bundle or composite (10,000 filaments) | 30-60 Ω/mm | 0.6 mΩ/mm |

Turning to FIG. 6, a channel 42 for the tread wear plug 44 is formed in a selected tread element 32. The container 38 is formed with a sensor unit opening 72, which enables the sensor unit 28 to be removed from the container and thus removably mounted to the tire 12. An opening 74 is formed in the container base 48 in alignment with the channel 42 in the tread element 32. The aligned channel 42 and opening 74 pass radially from an inner surface of the internal cavity 30 of the tire 12 to the radially outer surface 34 of the tread 22. The channel 42 and opening 74 may be formed by drilling, water jet cutting, laser cutting, and or other method.

The tread wear plug 44 is installed in the tire 12 before the tire 12 is mounted on the wheel 36. The shaft 56 of the tread wear plug 44 is inserted from the direction of the cavity 30 through the aligned container opening 74 and into the channel 42 in the tread element 32. The shaft 56 extends through the channel 42 in the tread element 32, with the shaft outer surface 66 being flush with the outer surface 34 of the tread element 32. Preferably, the shaft 56 is formed of a material that includes mechanical properties, such as shear modulus, which are similar to those of the material of the tread 22. Such similarity ensures that there are no rigid components within the structure of the tire 12, thereby enabling the shaft 56 of the tread wear plug 44 to behave like a compatible plug in the tread element 32.

The flange 58 of the tread wear plug 44 preferably is of an elastomeric material that is compatible with the container 38. Once the shaft 56 is inserted into the container base opening 74 and the channel 42, the flange 58 engages the base 48 of the container 38 to provide a positive mechanical stop for the tread wear plug 44. The flange 58 also provides a seal the container base opening 74 to prevent air flow from the tire cavity 30 out through the opening 74 and the channel 42.

Once the tread wear plug 44 is seated through the aligned container opening 74 and into the channel 42, and the flange 58 seats against the container base 48, the sensor unit 28 is reinstalled. The sensor unit 28 is inserted into the container 38 through the sensor unit opening 72. Because the container 38 is formed of a flexible material, a wall 76 and lip 78 flex to allow insertion of the sensor unit 28, and then secure the sensor unit in the container 38. The sensor unit 28 is rotated to enable each sensor electrical contact 54 to contact a respective proximal end 62 of the plug wire 60.

Turning to FIGS. 7 and 8, operation of the tire with a tread wear plug 10 is shown. With particular reference to FIG. 7, the tread wear plug 44 is installed in the tire 12, and the shaft outer surface 66 is flush with the tread element outer surface 34. A continuous electrical circuit is formed by the wire 60 and the contact of each proximal wire end 62 with each respective electrical contact 54 of the sensor unit 28. The distal end 64 of the wire 60 is disposed at a predetermined distance 70 (FIG. 5) below the radially outer surface 66 of the shaft 56, which corresponds to a minimum recommended tread depth.

Referring to FIG. 8, as the tread 22 wears, the shaft 56 of the wear plug 44 also wears. When the tread 22 and the shaft 56 wear down to the wire 60, the distal end 64 of the wire 60 breaks, creating a break in the electrical circuit formed by the wire and the contact of each proximal wire end 62 with each respective sensor unit electrical contact 54. The sensor unit 28 senses the break in the electrical circuit, and wirelessly transmits 40 a notice 86 that the electrical circuit has broken and/or that a predefined minimum tread depth has been reached. Th predefined minimum tread depth comprises a minimum recommended tread depth of the tire 12. The notice 86 transmitted 40 by the sensor unit 28 may be sent to a remote processor, such as a processor that is integrated into a vehicle electronic control unit, CAN bus, and/or a cloud-based server. The notice 86, by communicating that the minimum tread depth has been reached, thus indicates when replacement or retreading of the tire 12 should take place.

In this manner, the tire with a tread wear plug 10 indicates tire wear with components that are mounted within the tire 12 and does not require sensors that are external to the tire. The tire 12 with a tread wear plug 10 provides a direct wear sensor system for a vehicle tire 12 that includes a structure which is easy to install in the tire 12, withstands the operating environment of the tire 12, accurately indicates tire wear in a repeatable manner, and is capable of transmitting a wear indication to an electronic control system of the vehicle 14.

The present disclosure also includes a method of determining wear of a tire using a tread wear sensor plug 10, and a method of forming a tire with a tread wear sensor plug 10 for indicating tread depth. Each method includes steps in accordance with the description that is presented above and shown in FIGS. 1 through 8.

It is to be understood that the structure of the above-described tire with a tread wear plug 10 may be altered or rearranged, or components or steps known to those skilled in the art omitted or added, without affecting the overall concept or operation of the various embodiments. For example, a single tread wear plug 44 may be disposed in the tread 22 of the tire 12, or multiple tread wear plugs may be disposed in the tread the tire. In addition, the tread wear plug 44 may be inserted into the tread element 32 before or after curing of the tire 12. Furthermore, the tread wear plug 44 may include multiple wires 60, each one having a distal end 64 spaced apart from the other wires, which enables the tread wear plug to indicate different wear states of the tread 22, without affecting the overall concept or operation of the various embodiments.

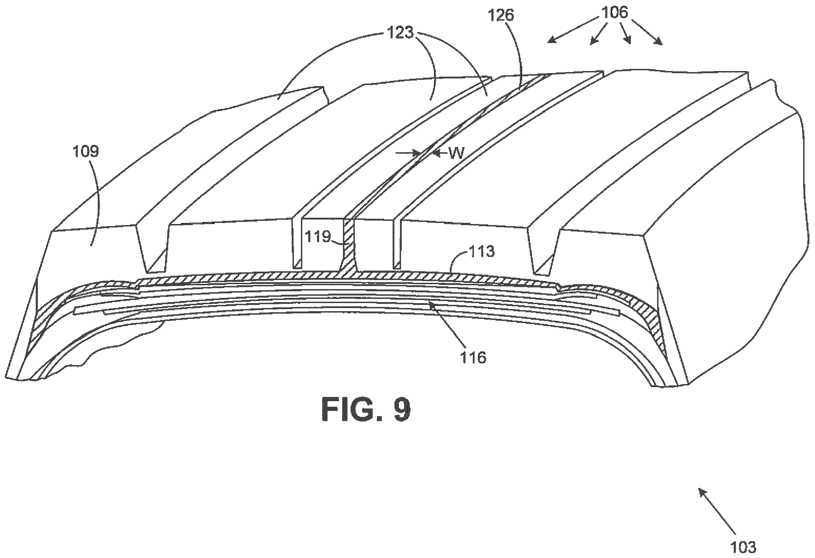

Referring next to FIG. 9, shown is a cross sectional view of a portion of a tire 103 according to various embodiments. The tire 103 includes a tread 106 comprising multiple tread elements 109. The tread 106 is positioned adjacent to, and radially outward relative to, an undertread 113. The tire 103 includes a pair of sidewalls 20 (FIG. 2), where each one of the sidewalls 20 extend radially outwardly from a respective bead to the tread 106. The tire 103 also includes a belt package 116 positioned radially inwardly relative to the undertread 113. The tire 103 includes a carcass with an innerliner and other components as can be appreciated.

The tire 103 also includes a chimney 119 that extends from the undertread 113 to the radially outer surface 123 of the tire 103 defined by the tread 106. The chimney 119 includes a chimney outer surface 126 that is generally flush with the radially outer surface 123 of the tire 103 and respective tread elements 106 in which the chimney 119 is disposed. Although the chimney 119 is shown in FIG. 9 as positioned within a single tread element 106, it is understood that the chimney 119 may run through multiple tread elements 106.

Various tires 103 are manufactured with the goal of achieving a predefined resistance from the hub upon which a tire 103 is installed to the ground. To measure the resistance of a given tire 103, the tire 103 may be installed on a test hub and the tire 103 may be placed on a metal plate under load at a predefined internal pressure and a desired temperature. The resistance presented by the tire may be measured from the hub to the metal plate upon which the tire 103 is placed. For some applications, a higher value of resistance is acceptable where such tires may include a resistance of less than 10 MΩ or other appropriate resistance value. For certain applications such as vehicles that haul flammable materials, it may be desirable that the resistance of a given tire to ground may be less than 1 MΩ. These resistances are noted herein as the tire resistance.

In one embodiment, the undertread 113 is constructed from a rubber material which provides for a degree of conductivity. To this end, the undertread 113 may be constructed from the materials that provide for a tire resistance of less than 10 MΩ, 1 MΩ, or other desired tire resistance as mentioned above. Given the fact that the undertread 113 is conductive, electrical current is able to flow through such material. The undertread 113 is electrically coupled to the metal hub upon which the tire 103 is mounted through conductive elements of the sidewalls 20 (FIG. 2) and other components of the tire 103 as can be appreciated.

The chimney 119 may be constructed from a conductive rubber composition as is described in the appendix of the present disclosure. The conductive rubber composition comprises, for example, a rubber component and one or more electrically conductive carbon components. The conductive rubber composition has an uncured or cured electrical resistance at 23°C less than 10KΩ when formed into a wire 254 mm long and 2 mm in diameter. Given these parameters, various actual measurements of the resistance of such conductive rubber compositions include 1.3 KΩ, 4,4 KΩ, and 5.5 KΩ. According to one embodiment, the resistivity of the chimney 119 is much less than the resistivity of the undertread 113. For example, the resistivity of such conductive rubber composition may be, for example, 7.7 Ohm-centimeters or other value of a similar order as compared to materials that might have a resistivity be below 7.0 ^{×} 10⁵ Ohm-centimeters. As an alternative, the resistivity of an acceptable rubber composition may have a resistivity that is one or two more orders of magnitude greater than 7.7 ^{×} 10¹ Ohm-centimeters as can be appreciated.

When the tire 103 is installed on a vehicle, the chimney 119 establishes a conductive pathway from the conductive undertread 113 to the ground upon which the vehicle travels. In this respect, the ground includes all elements upon which a vehicle may travel including pavement, cement, steel (bridges) dirt, rocks, or any other elements as can appreciated. As such, the term ground as contemplated herein refers to an electrical ground as well as a physical ground upon which a vehicle rests. The tire 103 includes a conductive pathway established with conductive materials from the hubs of a vehicle through the sidewalls 20 to the undertread 113. The chimney 119 completes the circuit by providing a conductive pathway from the undertread 113 to the terrestrial medium upon which the vehicle travels.

As a given vehicle travels, it is common to acquire a static charge relative to ground. The chimney 119 provides a conductive pathway through the tread 106 through which such a static charge can be discharged to ground. This prevents the buildup of large static charges in the vehicle relative to the ground.

A lateral width W of the chimney 119 is specified to provide for a predetermined minimum chimney outer surface area in the footprint of the tire 103. This minimum surface area provides for a pathway from the undertread 113 to ground for effective discharge of an electrostatic charge that builds up in the vehicle relative to the ground. The actual width W of the chimney 119 will depend upon the desired tire resistance as will be described.

The lateral position of the chimney 119 may vary depending on the locations of the tread elements 109 of a given tire 103. In one embodiment, the chimney 119 is located at a lateral position on the tread 106 so as to maximize the contact between the outer surface of the chimney 119 and the ground. In one embodiment, the chimney 119 may be positioned so that a center of the chimney 119 coincides with an equatorial plane of the tire 103.

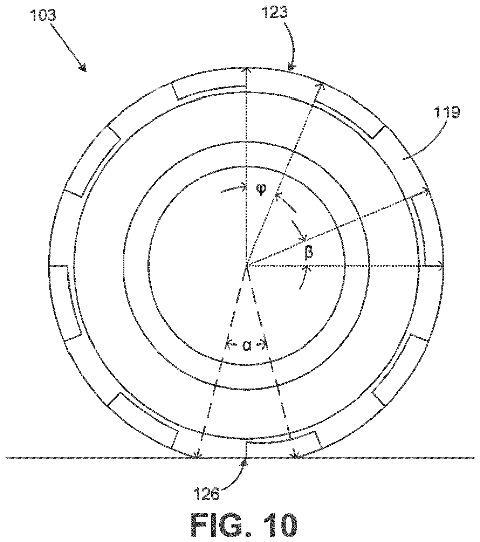

Referring next to FIG. 10, shown is a partial side cutaway view of the tire 103 according to various embodiments. As shown, in one example embodiment, the chimney 119 comprises an annular chimney that extends circumferentially 360 degrees around the entire periphery of the tire 103. In this manner, at least a portion of an annular chimney is always within a footprint 126 of the tire 103, thereby establishing constant and uninterrupted contact with the ground.

In an alternative embodiment, the chimney 119 may extend circumferentially around at least a portion of the tread 106. In this respect, as shown in FIG. 10, angular sections noted by angle ϕ in which the chimney 119 extends from the undertread 113 to the radially outer surface 123 of the tire 103 . Between the sections where the chimney 119 so extends are angular voids noted by angle β in which the chimney 119 is omitted. In addition, a further angle α is defined by the edges of the footprint 126 that provide a maximum circumferential distance across the footprint 126 of the tire 103. According to one embodiment, the angle ϕ of the angular voids between the angular sections of the chimney 119 is less than the angle α of the maximum circumferential distance of the footprint 126 of the tire 103. This ensures that an electrical pathway between the undertread 113 and ground through the chimney 119 is continuous with the rotation of the tire 103. To manufacture a tire 103 having a chimney 119 that is exposed at the radially outer surface 123 intermittently as opposed to a full circumference around the tire 103, an uncured split tread may be mated with a center chimney section that alternates between respective materials to create the angular sections noted by angle ϕ in which the chimney 119 extends from the undertread 113.

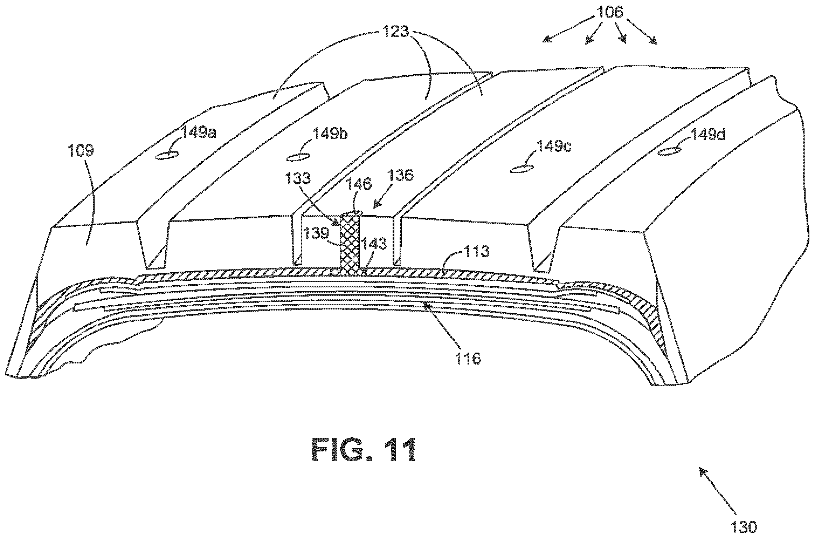

With reference to FIG. 11, shown is a cross sectional view of a portion of a tire 130 according to various embodiments. The tire 130 is similar to the tire 103, where components that both embodiments have in common are indicated using the same reference numbers. The tire 130 includes a channel 133 that extends through a tread element 109 of the tread 106.

The tire 130 includes a conductive insert 136 that comprises a shaft 139 that includes a flange 143 at one end. The flange 143 extends outwardly from the end of the shaft 139 to provide a base for the conductive insert 136. The conductive insert 136 is placed into the channel 133 such that an outer surface 146 of the shaft 139 is flush with the radially outer surface 123 of a respective tread element 109. In this manner, the conductive insert 136 extends from the undertread 113 through the channel to the radially outer surface 123 of a respective tread element 109 of the tread 106. As such, the radially outermost surface of the conductive insert 136 is flush with the outer surface of a respective tread element 109 of the tread 106. The tire 130 includes a pair of sidewalls 20 (FIG. 2), where each one of the sidewalls 20 extend radially outwardly from a respective bead to the tread 106.

As was described above, the undertread 113 is constructed from a material that provides for a degree of conductivity to allow electrical current to flow through such material. This makes the undertread 113 a conductive component of the tire 130. The undertread 113 is positioned radially inward relative to the radially outer surface 123 of the tread 106. The undertread 113 is electrically coupled to the metal hub upon which the tire 130 is mounted through conductive elements of the sidewalls 20 and other components of the tire 103 as can be appreciated.

According to one embodiment, the conductive insert 136 is constructed from a conductive rubber composition as described in the appendix of the present disclosure. As mentioned above, the conductive rubber composition comprises, for example, a rubber component and one or more electrically conductive carbon components. The conductive rubber composition has an uncured or cured electrical resistance at 23°C less than 10KΩ when formed into a wire 254 mm long and 2 mm in diameter. Given these parameters, various actual measurements of the resistance of such conductive rubber compositions include 1.3 KΩ, 4,4 KΩ, and 5.5 KΩ. Consequently, the resistivity of the conductive insert 136 is much less than the resistivity of the undertread 113. For example, the resistivity of such conductive rubber composition may be, for example, 7.7 Ohm-centimeters or other value of a similar order as compared to materials that might have a resistivity be below 7.0 ^{×} 10⁵ Ohm-centimeters. As an alternative, the resistivity of an acceptable rubber composition may have a resistivity that is one or two more orders of magnitude greater than 7.7 ^{×} 10¹ Ohm-centimeters as can be appreciated.

The flange 143 of the conductive insert 136 is positioned so as to come into contact with the material of the undertread 143. In one embodiment, the flange 143 displaces a portion of the undertread 143. By virtue of the contact between the flange 143 and the undertread 143, the conductive insert 136 establishes an electrical pathway from the undertread 113 to the radially outer surface 123 of the tread 106.

To construct the tire 130 with the conductive insert 136, the channel 133 may be formed in a respective tread element 109 before or after the tread 106 has been cured and placed on the tire 130 during assembly. Also, a void shaped like the flange 143 is created in the undertread 113 to accommodate the flange 143. A center axis of the void is in alignment with a center axis of the channel 133 through the respective tread element 109 so as to accommodate the entire conductive insert 136.

When placed in the tread 106 of the tire 130, the conductive insert 136 establishes a conductive pathway from the conductive undertread 113 to the ground upon which the vehicle travels. Given that the tire 103 includes a conductive pathway established with conductive materials from the hubs of a vehicle through the sidewalls 20 to the undertread 113, the conductive insert 136 completes the circuit by providing a conductive pathway from the undertread 113 to the ground upon which the vehicle travels when the conductive insert 136 falls within the footprint of the tire 130. In this manner, the conductive insert 136 facilitates the discharge of a static charge that builds up in the vehicle relative to the ground as the vehicle travels in a manner similar to the chimney 119 (FIG. 9) discussed above.

To ensure that an electrostatic charge of at least a predefined magnitude is discharged to ground through the conductive insert 136, the size and shape of the shaft 139 may be specified so that the radially outer surface of the conductive insert 136 is large enough such that the ultimate resistance presented by the conductive insert 136 is low enough to facilitate a satisfactory discharge to ground.

The conductive insert 136 may be placed at any position where a tread element 109 exists on the tread 106. That is to say that the conductive insert 136 may be located at any position laterally on the tread 106 with the exception that there must be space for the flange 143 relative to a side edge of the undertread 113 if the conductive insert 136 is placed near an edge of the tread 106. As an illustration, the conductive insert 136 may be placed at positions 149a-d.

In addition, a plurality of conductive inserts 136 may be included in a single tire 130. In such case, each individual one of such conductive inserts 136 may be placed at various positions on a given tread 106 of the tire 130.

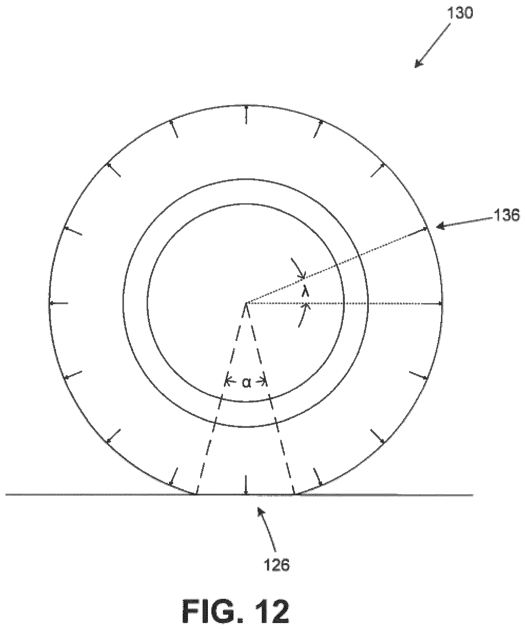

Referring next to FIG. 12, shown is a partial side cutaway view of the tire 130 according to various embodiments. In one embodiment, the conductive inserts 136 are positioned circumferentially around the tread 106 at even intervals. As shown in FIG. 12, an angle λ is defined between any two adjacent conductive inserts 136. Also, an angle α is defined by the edges of the footprint 126 that provide a minimum circumferential distance across the footprint 126 of the tire 103. According to one embodiment, the angle λ is less than the angle α so as to ensure that one of the conductive inserts 136 falls within the footprint at any given time. This ensures that constant and uninterrupted electrical contact is maintained between the undertread 113 (FIG. 11) and the ground through a respective one of the conductive inserts 136.

It is understood that in some embodiments, it is not necessary that at least one conductive insert 136 falls within the footprint at any given time. That is to say, a lesser number of conductive inserts 136 may be employed where acceptable electrostatic discharge is accomplished when a given conductive insert 136 falls within the footprint of a tire 103 as the tire 103 rotates, where a period of time exists between when a given conductive insert 136 leaves the footprint and another conductive insert 136 enters the footprint. Indeed, in one embodiment, a given tire 103 may only include a single conductive insert 136 and electrostatic discharge may substantially occur once each revolution of the tire 103 when such conductive insert 136 falls into the footprint of a tire 103. As such, the conductive inserts 103 may be used to establish intermittent contact between inner conductive elements of the tire 103 and the ground.

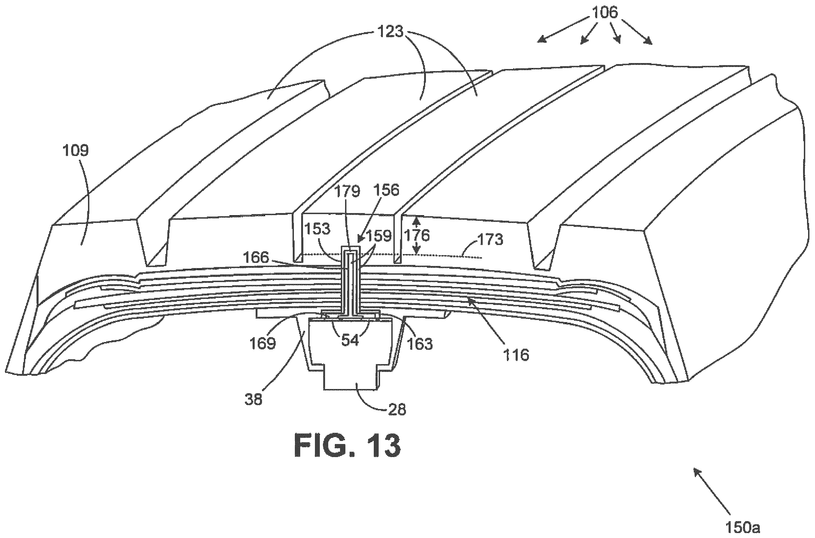

Turning then to FIG. 13, shown is a cross sectional view of a portion of a tire 150a according to various embodiments. The tire 150a is similar to the tire 103, where components that both tires 103 and 150a have in common are indicated using the same reference numbers. Thus, the tire 150a includes a tread 106 comprising multiple tread elements 109. The tread 106 is positioned adjacent to, and radially outward relative to, an undertread 113. The tire 150a includes a pair of sidewalls 20 (FIG. 2), where each one of the sidewalls 20 extend radially outwardly from a respective bead to the tread 106. The tire 103 also includes a belt package 116 positioned radially inwardly relative to the undertread 113. The tire 150a also includes a carcass with an innerliner and other components as can be appreciated.

In addition, the tire 150a includes a channel 153 that extends from an inside surface of the tire 150a through a least a portion of one of the tread elements 109. A tread wear plug 156 having a shaft 159 is positioned in the channel 153. A flange 163 extends outwardly from one end of the shaft 159 to provide a base for the tread wear plug 156.

The tire 150a includes the sensor unit 28 that is held in the container 38 as was discussed with respect to FIGS. 1-8 above.

The tread wear plug 156 further includes a conductor 166 embedded in the shaft 159. Each of the ends of the conductor 166 terminate into a corresponding sensor contact 169 in the flange 163. Each sensor contact 169 is exposed on an open end of the flange 163. The conductor 166 and the sensor contacts 169 are constructed from the conductive rubber composition described in the appendix included in the present disclosure. Alternatively, the conductor 166 and sensor contacts 169 may be constructed from carbon fiber or other material with similar properties.

As mentioned above, the conductive rubber composition comprises, for example, a rubber component and one or more electrically conductive carbon components. The conductive rubber composition has an uncured or cured electrical resistance at 23°C less than 10KΩ when formed into a wire 254 mm long and 2 mm in diameter. Given these parameters, various actual measurements of the resistance of such conductive rubber compositions include 1.3 KΩ, 4,4 KΩ, and 5.5 KΩ. The resistivity of such conductive rubber composition may be, for example, 7.7 Ohm-centimeters or other value of a similar order as compared to materials that might have a resistivity be below 7.0 ^{×} 10⁵ Ohm-centimeters. As an alternative, the resistivity of an acceptable rubber composition may have a resistivity that is one or two more orders of magnitude greater than 7.7 ^{×} 10¹ Ohm-centimeters as can be appreciated.

The portion of the shaft 159 in which the conductor 166 is embedded is constructed from a material with properties similar to the properties of the tread 106 of the tire 150a. In one embodiment, this material is nonconductive to electrically isolate the conductor 166 from other portions of the tire 150a such as the belt package 116. Alternatively, the material of the shaft 159 may have a very high resistivity as compared to the resistivity of the conductor 166 such that the material will not interfere with the ability to detect a lack of continuity in the conductor 166 as will be described. The material may comprise any one of various rubber compositions having suitable characteristics for use in the tire 150a.

The tire 150a includes a predefined minimum tread depth 173. As a tire 150a is put into service on a vehicle over time, the tread 106 will wear down. The predefined minimum tread depth 173 is a minimum recommended tread depth at which the tire 150a can be placed into service. Once the tread 106 wears below the predefined minimum tread depth 173, then the tire 150a should be taken out of service. The tread 106 of the tire 150a thus includes a sacrificial portion 176 that is expected to wear away over time while the tire 150a is in service. The conductor 166 includes a radially outermost portion 179 that is positioned at a predefined depth with respect to the outer surface of the tread element 109 of the tread 106. In one embodiment, this radially outermost portion 179 is positioned within the sacrificial portion 176 of the tread 106 such that when the entire radially outermost portion 179 is worn away, the continuity of the conductor 166 is compromised and detected by the sensor unit 28 as described above.

As such, the radially outermost portion 179 of the conductor 166 may be positioned at any depth in the tread 106 so as to detect wear of the tread 106 at various heights. In one embodiment, the radially outermost portion 179 of the conductor 166 is positioned relative to the predefined minimum tread depth 173 such that when the radially outermost portion 179 of the conductor 166 has worn away, the tread 106 will have been worn down to the predefined minimum tread depth 173. The sensor unit 28 can thus detect when the tire 150a has reached maximum wear and should be taken out of service.

As was mentioned above, the sensor unit 28 includes a pair of electrical contacts 54 that are mounted on the base 52 (FIG. 4) and extend through the housing 50 (FIG. 4). The sensor unit 28 comprises an electrically active sensor as described above. According to one embodiment, each of the electrical contacts 54 are in direct contact with a corresponding one of the sensor contacts 169 in the tread wear plug 156. Given that the sensor contacts 169 exposed on the open end of the flange 163 are constructed from the conductive rubber composite material, the flexibility of the material ensures solid electrical contact between the sensor contacts 169 of the tread wear plug 156 and the electrical contacts 54 of the sensor unit 28. In one embodiment, the sensor unit 28 is held by the container 38 such that the electrical contacts 54 are pressed or driven into the sensor contacts 169 to ensure that electrical contact between the electrical contacts 54 and the sensor contacts 169, respectively, is maintained while the tire 150a is in service.

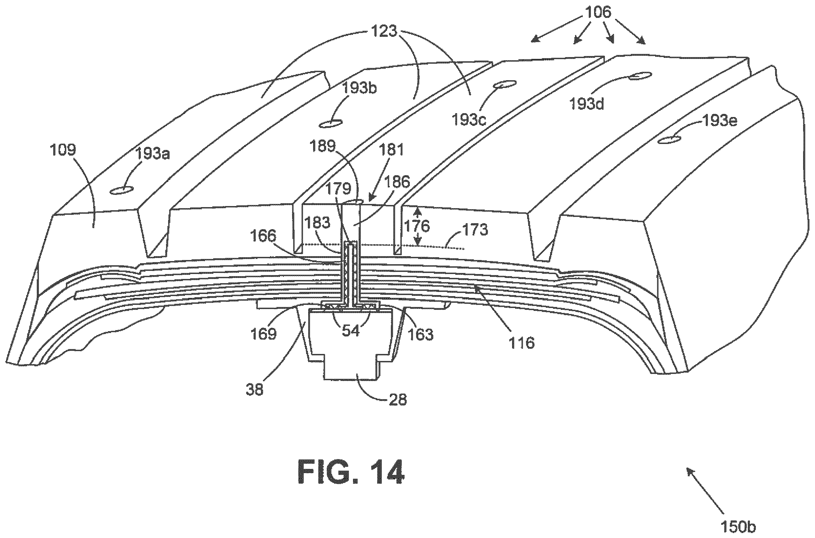

Referring next to FIG. 14, shown is a cross sectional view of a portion of a tire 150b according to various embodiments. The tire 150b is essentially the same as the tire 150a (FIG. 13), where reference numbers for like components are the same for both figures. The tire 150b is essentially the same as the tire 150a except for the fact that the channel 183 extends from the inside surface of the tire 150b to a radially outer surface 123 of a respective one of the tread elements 109 of the tread 106. Also, the shaft 186 of the tread wear plug 181 extends through the entire channel 183 such that the radially outermost surface 189 of the shaft 186 is flush with the radially outermost surface 123 of a given tread element 109 of the tread 106. To the extent that tread elements 109 may vary in height, the radially outermost surface 189 is flush with the radially outermost surface of a tread element 109 into which the tread wear plug 181 is disposed.

In addition, with respect to FIGS. 13 and 14, the tread wear plugs 156 or 181 may be located at any lateral position on the tread 106 of the tire 150a/150b. For example, the tread wear plug 181 may be placed at positions 193a-e or any other position on the tread 106 in a given tread element 109 as shown. In this manner, the tread wear plugs 156/181 may be positioned to detect tread wear at any lateral location on the tread 106 of a tire 150a/150b. Also, according to various embodiments, the radial outermost portion 179 of the conductor 166 may be positioned at various predefined depths with respect to the radial outer surface 123 of a given tread element 109 to detect different levels of wear of the tread 106. For example, it may be desirable to detect different levels of wear of a tread 106 at different lateral locations on the tread 106.

In one embodiment, a tread wear plug 156/181 may be positioned to intersect an equatorial plane of a tire 150a/150b. Alternatively, a tread wear plug 156/181 may be positioned such that a first distance between a channel 153/183 and a lateral edge of the tread 106 may be greater than a second distance between a channel 153/183 and the equatorial plane of the tire 150a/150b. Also, a distance between the channel 153/183 and an equatorial plane of the tire 150a/150b may be greater than a distance between the channel 153/183 and a lateral edge of the tread 106.

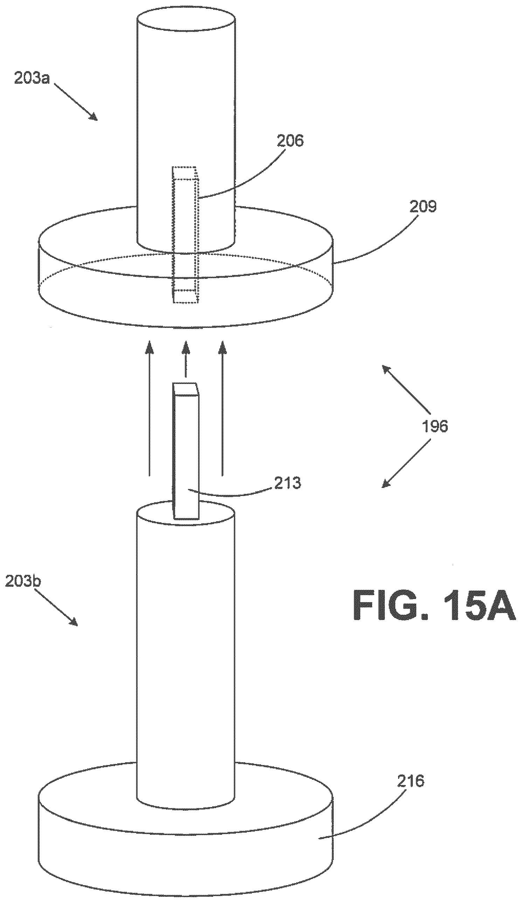

With reference to FIGS. 15A, shown is an exploded view of an example of a tread wear sensor plug 196 that also provides for an electrostatic discharge according to an embodiment of the present disclosure. The tread wear sensor plug 196 includes a shaft 203 that is to be positioned in a channel 183 as will be described. The shaft 203 includes an electrostatic discharge portion 203a and a tread wear sensor portion 203b.

The electrostatic discharge portion 203a of the shaft 203 includes an inner channel 206 that may be shaped so as to receive a portion of the tread wear sensor portion 203b as will be described. Also, in one embodiment, a flange 209 extends from a radially innermost end of the electrostatic discharge portion 203a of the shaft 203. However, in another embodiment, the flange 209 may be omitted.

In one embodiment, the electrostatic discharge portion 203a of the shaft 203 is constructed from the conductive rubber composition which comprises, for example, a rubber component and one or more electrically conductive carbon components. The conductive rubber composition has an uncured or cured electrical resistance at 23°C less than 10KΩ when formed into a wire 254 mm long and 2 mm in diameter.

The tread wear sensor portion 203b includes a tread sensor extension 213 that protrudes from a radially outermost end of the tread wear sensor portion 203b. The tread sensor extension 213 is shaped so as to fit within the inner channel 206 of the electrostatic discharge portion 203a. When the tread sensor extension 213 is positioned in the inner channel 206 of the electrostatic discharge portion 203a, the electrostatic discharge portion 203a and the tread wear sensor portion 203b together comprise the entire shaft 203 of the tread wear sensor plug 196. Also, a flange 216 extends from a radially innermost end of the tread wear sensor portion 203b.

The electrostatic discharge portion 203a may be placed into a portion of the channel 183 that extends through the tread 106 before the tread 106 is applied to a tire 220. In this respect, the tread 106 may be in a cured or uncured state when the electrostatic discharge portion 203a is positioned in the portion of the channel 183 extending through the tread 106. Ultimately, when the tread 106 is placed on the tire 220 during the manufacturing process, the portion of the channel 183 that extends through the tread 106 would be positioned so as to align with the portion of the channel 183 extending through the remaining components of the tire 220 including the undertread 113, belt package 116, inner lining, and potentially other components.

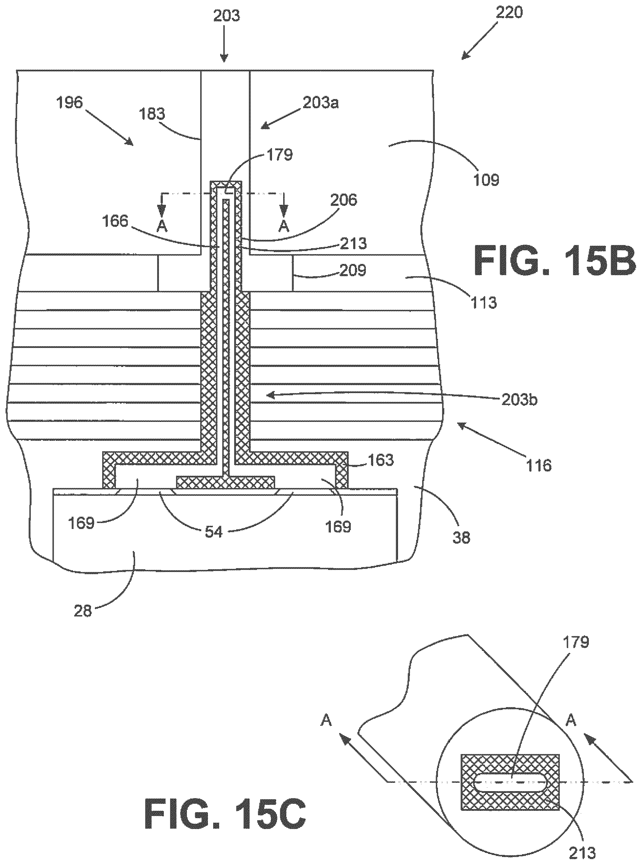

Referring next to FIG. 15B, shown is a cutaway view of a portion of a tire 220 that illustrates the tread wear sensor plug 196 of FIG. 15A placed in a channel 183. The tire 220 includes many of the elements of the tire 150b (FIG. 14), where reference numbers for like components are the same for both structures. The tread wear sensor plug 196 includes the conductor 166 embedded within the tread wear sensor portion 203b. The material of the tread wear sensor portion 203b is constructed from a material with properties similar to the properties of the tread 106 of the tire 220. In one embodiment, this material is nonconductive to electrically isolate the conductor 166 from other portions of the tire 220 such as the belt package 116. Alternatively, the material of the tread wear sensor portion 203b may have a very high resistivity as compared to the resistivity of the conductor 166 such that the material will not interfere with the ability to detect a lack of continuity in the conductor 166. The material may comprise any one of various rubber compositions having suitable characteristics for use in the tire 220.

The tire 200 includes the channel 183 that extends from the inner surface of the tire 200 to the radially outermost surface 123 (FIG. 14) of the tire 200. In this respect, the channel 183 extends through various components such as a belt package 116, the undertread 113, and other components of the tire 200.

The conductor 166 extends into the tread sensor extension 213 such that the radially outermost portion 179 of the conductor 166 is positioned so as to detect a predefined amount of tread wear of the tire 220. As mentioned above, when the tread 106 is worn down to the point of breaking the conductor 166, the sensor unit 28 detects the discontinuity in the conductor 166 and signals that the tread 106 of the tire 166 has reached the minimum level of tread needed for safe vehicle operation. In this manner, an operator of the vehicle is warned that the tire needs to be replaced. Thus, the conductor 166 is embedded within the tread wear sensor portion 203 so as that the point of wear of the tread 106 that triggers the warning to the operator is a point in which the conductor 166 will be worn away such that a discontinuity in the conductor 166 occurs.

In one embodiment, the conductor 166 may comprise the conductive rubber composition described in the attached appendix which comprises, for example, a rubber component and one or more electrically conductive carbon components. The conductive rubber composition has an uncured or cured electrical resistance at 23°C less than 10 KΩ when formed into a wire 254 mm long and 2 mm in diameter. Alternatively, the conductor 166 and sensor contacts 169 may be constructed from carbon fiber or other material with similar properties.

As was described in other embodiments above, the ends of the conductor 166 terminate into sensor contacts 169. Also, the sensor unit 28 includes a pair of electrical contacts 54. The electrical contacts 54 are in direct contact with a corresponding one of the sensor contacts 169 in the tread wear plug 156 as was mentioned above. Given that the sensor contacts 169 exposed on the open end of the flange 163 are constructed from the conductive rubber composite material, the flexibility of the material ensures solid electrical contact between the sensor contacts 169 of the tread wear plug 156 and the electrical contacts 54 of the sensor unit 28. In one embodiment, the sensor unit 28 is held by the container 38 such that the electrical contacts 54 are pressed or driven into the sensor contacts 169 to ensure that electrical contact between the electrical contacts 54 and the sensor contacts 169, respectively, is maintained while the tire 150a is in service.

In addition, the electrostatic discharge portion 203a may or may not include the flange 209. In this respect, the flange 209 is optional. According to one embodiment, the electrostatic discharge portion 203a is in direct contact with, or electrically coupled to, a conductive component such as an undertread 113 of the tire 220. In this respect, if the electrostatic discharge portion 203a includes the flange 209, then it may be the case that the flange 209 comes into contact with the conductive component such as the undertread 113. In the case that the electrostatic discharge portion 203a does not include the flange 209, the shaft portion of the electrostatic discharge portion 203a may be in direct contact with, or electrically coupled to such conductive component such as the undertread 113.

Referring next to FIG. 15C, shown is a cutaway view taken across section line AA depicted in FIG. 15B. As shown, the material of the tread sensor extension 213 surrounds the conductor 166 (FIG. 15B), where section line AA cuts through the center of the radially outermost portion 179 of the conductor 166. As such, the conductor 166 is electrically isolated from the electrostatic discharge portion 203a of the shaft 203. In one embodiment, the conductor 166 may actually come into electrical contact with the electrostatic discharge portion 203a. However, such contact cannot result in an electrical bypass of the radially outermost portion 179 of the conductor 166 that would electrically bridge any discontinuity in the radially outermost portion 179, thereby undermining the tread wear detection capability of the tread wear sensor plug 196.

In an additional embodiment, the portion of the electrostatic discharge portion 203a that coincides with the tread sensor extension 213 may have a larger diameter or cross sectional surface area to ensure enough cross sectional area exists for this section so that resistance of the electrostatic discharge portion 203a is not increased such that the ultimate tire resistance does not meet a given target resistance. To this end, the channel 183 may be made larger or of a different shape in this region to accommodate the larger cross sectional surface area of the electrostatic discharge portion 203a in this section.

It should be noted that the tread wear sensor plug 196 may be used in place of one of the conductive inserts 136 (FIG. 11). For example, in the case that a tire 130 (FIG. 11) includes multiple conductive inserts 136, at least one tread wear sensor plug 196 may be used along with the conductive inserts 136. In this manner, one or more tread wear sensor plugs 196 may be used in place of a conductive insert 136 in positions where it is desirable to provide for tread wear sensing on a given tire 130.

Referring now to FIGS. 9-12 and 15A-C, shown are various embodiments that include a chimney 119, a conductive insert 136, or the tread wear sensor plug 196 that includes the electrostatic discharge portion 203a, where the electrostatic discharge portion 203a acts in a similar manner to the conductive insert 126. It is understood that these various mechanisms may be employed to achieve a desired tire resistance for a given tire.

For example, if resistance of a given tire design must be reduced, one may increase the Width W (FIG. 9) of the chimney 119, increase the cross sectional area of conductive inserts 136, or increase the cross sectional area of the conductive portion of the electrostatic discharge portion 203a (FIGS. 15A-C) of the shaft 203 (FIGS. 15A-C). Also, one may add more chimneys 119, conductive inserts 136, and/or tread wear sensor plugs 196 to the tire. These approaches would result in a correspondingly greater cross sectional surface area of such components in the footprint of the tire, thereby translated into lower tire resistance.

Similarly, if resistance of a given tire design must be increased, one may decrease the Width W (FIG. 9) of the chimney 119, decrease the cross sectional area of conductive inserts 136, or decrease the cross sectional area of the conductive portion of the electrostatic discharge portion 203a (FIGS. 15A-C) of the shaft 203 (FIGS. 15A-C). Also, one may reduce the number of chimneys 119, conductive inserts 136, and/or tread wear sensor plugs 196 that fall into the footprint of a tire.

In the present disclosure, disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure.

In one aspect, disclosed herein are conductive rubber compositions including a rubber component and one or more electrically conductive carbon compounds. In another aspect, the conductive rubber compositions can be prepared by first adding the one or more conductive carbon components into the polymer phase, thereby creating a filler network in the continuous polymer phase in the finished product. In a further aspect, the conductive carbon component can be or include one or more of the following: carbon black, a short carbon fiber, graphite powder, or graphene powder. Following mixing, the conductive rubber compositions can optionally be vulcanized. The conductive rubber compositions have acceptable mechanical properties and conductivity and can be processed using existing equipment.

### Rubber Components

In one aspect, the conductive rubber compositions disclose herein include a rubber component. In a further aspect, the rubber component can be natural rubber (NR), polyisoprene rubber (IR), a styrene butadiene rubber (SBR), a polybutadiene rubber (BR), a butyl or halobutyl rubber, an ethylene propylene rubber (EM), an ethylene-propylene diene rubber (EPDM), polychloroprene rubber (CR), a nitrile butadiene rubber (NBR) hydrogenated acrylonitrile butadiene rubber (HNBR), a silicone rubber (MQ), a thermoplastic rubber, or any combination thereof. In a further aspect, the butyl or halobutyl rubber can be isobutylene-isoprene rubber (IIR), brominated isobutylene-isoprene rubber (BIIR), chlorinated isobutylene-isoprene rubber (CIIR), brominated isobutylene-co-p-methylstyrene rubber (BIMS), or any combination thereof. In another aspect, the thermoplastic rubber can be a poly(styrene-butadiene-styrene) rubber (SBS), a thermoplastic elastomeric rubber (TPE), a meltprocessable rubber (MPR), or any combination thereof. In one aspect, the thermoplastic elastomeric rubber can be a thermoplastic polyurethane rubber.

In one aspect, the conductive rubber composition includes a blend of two or more rubber components. In one aspect, and without wishing to be bound by theory, an electrically conductive system based on polymer blends can achieve a high electrical conductivity with lower filler content, thus alleviating difficulties with blending the carbon compounds in the polymers and reducing materials costs.

### Molecular Weight

In one aspect, the rubber component can have a molecular weight (M_{w}) of from 5 × 10⁴ Da to 3 × 10⁷ Da, or from 3 × 10⁵ Da to 5 × 10⁶ Da, or of 5 × 10⁴ Da, 6 × 10⁴ Da, 7 × 10⁴ Da, 8 × 10⁴ Da, 9 × 10⁴ Da, 1 × 10⁵ Da, 2 × 10⁵ Da, 3 × 10⁵ Da, 4 × 10⁵ Da, 5 × 10⁵ Da, 6 × 10⁵ Da, 7 × 10⁵ Da, 8 × 10⁵ Da, 9 × 10⁵ Da, 1 × 10⁶ Da, 2 × 10⁶ Da, 3 × 10⁶ Da, 4 × 10⁶ Da, 5 × 10⁶ Da, 6 × 10⁶ Da, 7 × 10⁶ Da, 8 × 10⁶ Da, 9 × 10⁶ Da, 1 × 10⁷ Da, 2 × 10⁷ Da, or 3 × 10⁷ Da, or a combination of any of the foregoing values, or a range encompassing any of the foregoing values.

### Molecular Weight Distribution

In another aspect, the rubber component can have a molecular weight distribution (M_{w}/Mₙ) of from 1 to 10, or from 2.1 to 10, or from 3.9 to 8.2, or of 1, 1.25, 1.5, 1.75, 2, 2.1, 2.25, 2.5, 2.75, 3, 3.25, 3.5, 3.75, 4, 4.25, 4.5, 4.75, 5, 5.25, 5.5, 5.75, 6, 6.25, 6.5, 6.75, 7, 7.25, 7.5, 7.75, 8, 8.25, 8.5, 8.75, 9, 9.25, 9.5, 9.75, or 10, or a combination of any of the foregoing values, or a range encompassing any of the foregoing values.

### Mooney Viscosity

In one aspect, the rubber component has a Mooney viscosity UML of from 0.01 to 150, or of 0.01, 0.05, 0.1, 0.5, 1, 2, 5, 10, 15, 20, 25, 30, 35, 40, 45, 50, 55, 60, 65, 70, 75, 80, 85, 90, 95, 100, 105, 110, 115, 120, 125, 130, 135, 140, 145, or 150, or a combination of any of the foregoing values, or a range encompassing any of the foregoing values. In another aspect, the rubber component has a Mooney viscosity UMS of from 2 to 150, or of 2, 5, 10, 15, 20, 25, 30, 35, 40, 45, 50, 55, 60, 65, 70, 75, 80, 85, 90, 95, 100, 105, 110, 115, 120, 125, 130, 135, 140, 145, or 150, or a combination of any of the foregoing values, or a range encompassing any of the foregoing values.

### Glass Transition Temperature (T_{g})

In one aspect, the rubber component has a glass transition temperature of from -110°C to 30°C, or from -75°C to -25°C, or of -110, -105, -100, -95, -90, -85, -80, -75, -70, -65, -60, -55, -50, -45, -40, -35, -30, -25, -20, -15, -10, -5, 0, 5, 10, 15, 20, 25, or 30°C, or a combination of any of the foregoing values, or a range encompassing any of the foregoing values.

### Exemplary Rubber Components

In one aspect, in the disclosed conductive rubber compositions, the rubber component includes a natural rubber having a molecular weight of from 3 × 10⁴ Da to 3 × 10⁷ Da and a glass transition temperature of from -75°C to -65°C.

In one aspect, in the disclosed conductive rubber compositions, the rubber component includes a synthetic cis-1,4-polyisoprene rubber having a molecular weight of from 2 × 10⁵ Da to 8 × 10⁵ Da, a Mooney viscosity UML of preferably 75, and a glass transition temperature of from -70°C to -60°C.

In one aspect, in the disclosed conductive rubber compositions, the rubber component includes an emulsion-polymerized styrene-butadiene rubber having a molecular weight of from 1 × 10⁵ Da to 4 × 10⁵ Da, a Mooney viscosity of 50 UML, and a glass transition temperature of from -60°C to -50°C.

In one aspect, in the disclosed conductive rubber compositions, the rubber component includes a solution-polymerized styrene-butadiene rubber having a molecular weight of from 7 × 10⁴ Da to 8 × 10⁴ Da, a Mooney viscosity UML of 2.6, and a glass transition temperature of from -30°C to -20°C.

Exemplary suitable rubber components include the following: TSR20 natural rubber, RSS Natural Rubber, NATSYN 2200, PLF1502, Exp SBR, and combinations thereof. In one aspect, TSR20 (Technically Specified Rubber) natural rubber is a block rubber available from several manufacturers consisting primarily of cis-1,4-polyisoprene and having a T_{g} of -70°C, a molecular weight distribution of 4.59 to 8.11, a Mooney viscosity (UML) of from 88 to 99.2, and 20% max dirt. In another aspect, RSS (#2 Ribbed Smoked Sheet Rubber) natural rubber is a form of raw natural rubber available from several manufacturers and having a T_{g} of - 70°C, a molecular weight distribution of from 1.35 to 2.36, and a Mooney viscosity (UMS) of 80 to 142. In either of these aspects, the molecular weight range of the natural rubber can be from 1 × 10⁷ Da to 3 × 10⁷ Da. In still another aspect, NATSYN 2200 (Goodyear Chemical, Akron OH) is a synthetic high cis polyisoprene containing a non-staining antioxidant and having a T_{g} of -64°C, an Mₙ of 2.04 × 10⁵ Da, an M_{w} of 7.31 × 10³ Da, a molecular weight distribution of 3.575, and a Mooney viscosity (UML) of 75. In one aspect, PLF1502 (PLIOFLEX 1502, Goodyear Chemical, Akron OH) is an emulsion polymerized styrene-butadiene copolymer (23.5% styrene, 12% vinyl, 55% trans, 10% cis) having a T_{g} of -55°C, an Mₙ of 1.01 × 10⁵ Da, an M_{w} of 4.03 × 10⁵ Da, a molecular weight distribution of 3.99, and a Mooney viscosity (UML) of 50, with a non-staining antioxidant. In one aspect, Exp SBR is an experimental Li-solution based styrene-butadiene rubber having a T_{g} of -26°C, an Mₙ of 7.39 × 10⁴ Da, an M_{w} of 7.39 × 10⁴ Da, a molecular weight distribution of 1.00, and a Mooney viscosity (UML) of 2.63.

### Carbon Compounds

In one aspect, the conductive rubber compositions disclosed herein include an electrically conductive carbon component. Exemplary conductive carbon components are described below.

In one aspect, the one or more carbon components can be present in an amount of from 20 phr to 150 phr, or of from 30 phr to 100 phr, or of from 40 phr to 80 phr, or at 20, 30, 40, 50, 60, 70, 80, 90, 100, 110, 120, 130, 140, or 150 phr, or a combination of any of the foregoing values, or a range encompassing any of the foregoing values.

### Carbon Black

In one aspect, the electrically conductive carbon component can be or include a carbon black. In another aspect, the carbon black can have an average particle size of from 5 nm to 100 nm, or from 5 nm to 50 nm, or of 5, 10, 15, 20, 25, 30, 35, 40, 45, 50, 55, 60, 65, 70, 75, 80, 85, 90, 95, or 100 nm, or a combination of any of the foregoing values, or a range encompassing any of the foregoing values.

In one aspect, the carbon black can have a BET surface area of from 20 m²/g to 1700 m²/g, or of from 50 m²/g to 1500 m²/g, or of 20, 50, 100, 200, 300, 400, 500, 600, 700, 800, 900, 1000, 1100, 1200, 1300, 1400, 1500, 1600, or 1700 m²/g, or a combination of any of the foregoing values, or a range encompassing any of the foregoing values.

In another aspect, the carbon black can have an external surface area based on statistical thickness method (STSA) of from 20 to 1200 m²/g, or 100 m³/g to 300 m³/g, or of from 150 m³/g to 200 m³/g, or of 20, 25, 50, 75, 100, 125, 150, 175, 200, 225, 250, 275, 300, 350, 400, 450, 500, 550, 600, 650, 700, 750, 800, 850, 900, 950, 1000, 1050, 1100, 1150, or 1200 m³/g, or a combination of any of the foregoing values, or a range encompassing any of the foregoing values.

In another aspect, the carbon black can have an oil absorption number of from 500 mL/100 g to 20 mL/100 g, or from 500 mL/100 g to 80 mL/100 g, or of 500, 450, 400, 350, 300, 250, 200, 150, 100, or 80 mL/100 g, or a combination of any of the foregoing values, or a range encompassing any of the foregoing values.

Exemplary suitable carbon blacks include, but are not limited to, the following: an N299 ASTM grade carbon black, PRINTEX XE2B (Orion Engineered Carbons, Luxembourg), PROPEL X22 (Cabot Corporation, Boston MA), or any combination thereof. In one aspect, PRINTEX XE2B has an oil absorption number of 410 mL/100 g as measured by standard test method ASTM D 2414, a BET surface area of 1100 m²/g as measured by ASTM D 6556, and an average primary particle size of 30 nm based on ASTM D 3849. In another aspect, PROPEL X22 has iodine of 230 mg/g according to standard test method ASTM D 1510, external surface area based on statistical thickness method (STSA) of 173 m²/g according to standard test method ASTM D6556, compressed sample oil absorption number (COAN) of 100 mL/100g according to standard test method ASTM D3493, and a tint of 150% ITRB according to standard test method ASTM D 3265. Additional useful carbon blacks include BLACK PEARLS 2000 carbon black and Vulcan XC-72 (BOTH FROM Cabot Corporation, Boston MA), CONDUCTEX 975 and CONDUCTEX SC (Columbian Chemicals, Hamilton ON Canada), and PRINTEX XE2, PRINTEX L, AND PRINTEX L6 (Orion Engineered Carbons, Luxembourg).

### Short Carbon Fiber

In one aspect, the electrically conductive carbon component can be or include a short carbon fiber. In one aspect, the short carbon fiber can be a carbon fiber, chopped carbon fiber yarn, multi-walled carbon nanotubes (MWCNTs), single-walled carbon nanotubes (SWCNTs), or any combination thereof. In one aspect, the short carbon fiber has a diameter of from 1 nm to 1000 nm, or of from 150 nm to 600 nm, or of 1, 10, 25, 50, 100, 150, 200, 250, 300, 350, 400, 450, 500, 550, 600, 650, 700, 750, 800, 850, 900, 950, or 1000 nm, or a combination of any of the foregoing values, or a range encompassing any of the foregoing values.

In another aspect, the short carbon fiber can have a length of from 1 µm to 1 × 10⁴ µm, or of 1, 100, 500, 1000, 2000, 3000, 4000, 5000, 6000, 7000, 8000, 9000, or 10,000 µm, or a combination of any of the foregoing values, or a range encompassing any of the foregoing values.

In still another aspect, the short carbon fiber can have an average lateral length to thickness ratio of from 10:1 to 10,000:1, or of 10:1, 50:1, 100:1, 500:1, 1000:1, 2000:1, 3000:1, 4000:1, 5000:1, 6000:1, 7000:1, 8000:1, 9000:1, or 10,000:1, or a combination of any of the foregoing values, or a range encompassing any of the foregoing values.

An exemplary short carbon fiber useful herein has a diameter of from 150 to 600 nm depending on the grade, a BET surface area of from 120-190 m²/g and a length of greater than 1 µm.

### Blends

In some aspect, the carbon component can include a blend. In one aspect, the one or more carbon components consists of a blend of carbon black and graphite powder, or of carbon black and graphene powder.

In another aspect, the one or more carbon components includes a blend of carbon black and a short carbon fiber. In one aspect, and without wishing to be bound by theory, the inclusion of a blend carbon black and short carbon fibers may provide additional advantages in terms of conductivity of the mixtures. In one aspect, the carbon black can improve interfiber contacts by forming particle bridges, while carbon fibers can aid the transport of electrons over long distances, thus establishing a continuous pathway for electrical conduction in the disclosed compositions. In some aspects, including a blend of carbon black and a short carbon fiber may result in the formation of a different conductive network structure in a blend of polymers versus a rubber composition based on a single polymer.

Further in this aspect, the short carbon fiber can be from 5 phr to 80 phr, or from 20 phr to 40 phr, or can be 5, 10, 15, 20, 25, 30, 35, 40, 45, 50, 55, 60, 65, 70, 75, or 80 phr, or a combination of any of the foregoing values, or a range encompassing any of the foregoing values, and the carbon black can be from 15 phr to 70 phr, or from 10 phr to 60 phr, or 10, 15, 20, 25, 30, 35, 40, 45, 50, 55, 60, 65, or 70 phr, or a combination of any of the foregoing values, or a range encompassing any of the foregoing values.

In an aspect, the electrically conductive carbon component can include an ASTM N299 grade carbon black and a short carbon fiber having a diameter of from 1 nm to 1000 nm and a length of from 1 µm to 1 × 10⁴ µm.

In another aspect, the electrically conductive carbon component can include a carbon black having an oil absorption number of 100 mL/100 g and a short carbon fiber having a diameter of from 1 nm to 1000 nm and a length of from 1 µm to 1 × 10⁴ µm.

In another aspect, the electrically conductive carbon component can include a carbon black having an average particle size of 30 nm and a short carbon fiber having a diameter of from 1 nm to 1000 nm and a length of from 1 µm to 1 × 10⁴ µm.

### Additional Components

In one aspect, the conductive rubber compositions disclosed herein can additionally contain one or more additional components in addition to those already described. In an aspect, the additional component can be selected from antioxidants and/or antiozonants, oils, zinc oxide, fatty acids, sulfur, an accelerator, a retarder, and combinations thereof.

### Antioxidant and/or Antiozonant

In one aspect, the conductive rubber compositions disclosed herein include at least one antioxidant, at least one anti-ozonant, or any combination thereof. In one aspect, an antiozonant can protect the rubber compositions from ozone (Os). In another aspect, the antiozonant can be a material such as a wax that travels to the surface of a rubber article to protect the article against attack from ozone. Suitable examples of antiozonant include, but are not limited to, Antiozite 67P (Vanderbilt Chemicals, LLC, Norwalk CT USA). In one aspect, the antioxidant is a non-staining antioxidant. In another aspect, the antioxidant can be an amine antioxidant, a diphenylamine antioxidant, a polymeric dihydroquinoline, or any combination thereof. In still another aspect, the antioxidant or antiozonant can be present in an amount of from 1 phr to 2 phr in the compositions, or at 1, 1.1, 1.2, 1.3, 1.4, 1.5, 1.6, 1.7, 1.8, 1.9, or 2 phr, or a combination of any of the foregoing values, or a range encompassing any of the foregoing values.

### Oil

In one aspect, the conductive rubber compositions include an oil. In another aspect, the oil is a standard rubber processing oil, such as, for example, an aromatic rubber process oil, a paraffinic rubber process oil, a naphthenic rubber process oil, or any combination thereof. In an aspect, the rubber process oil can improve the dispersion of fillers and flow characteristics of the rubber composition during processing. In one aspect, the oil can be present in an amount of from 4 phr to 30 phr, or at 4, 5, 6, 7, 8, 9, 10, 11, 12, 13, 14, 15, 16, 17, 18, 19, 20, 21, 22, 23, 24, 25, 26, 27, 28, 29, or 30 phr, or a combination of any of the foregoing values, or a range encompassing any of the foregoing values.

### Zinc Oxide

In one aspect, the conductive rubber compositions disclosed herein include zinc oxide. In another aspect, zinc oxide is a useful activator for rubber vulcanization. In one aspect, the zinc oxide is present in the conductive rubber compositions at from 1 phr to 5 phr, or at 1, 2, 3, 4, or 5 phr, or a combination of any of the foregoing values, or a range encompassing any of the foregoing values. In one aspect, the zinc oxide is present in an amount of 3 phr.

### Fatty Acid

In one aspect, the conductive rubber compositions disclosed herein include a fatty acid. In another aspect, the fatty acid can be stearic acid, palmitic acid, oleic acid, or any combination thereof. In a further aspect, the fatty acid can be present in the conductive rubber compositions in an amount of from 1 phr to 5 phr, or at 1, 1.1, 1.2, 1.3, 1.4, 1.5, 1.6, 1.7, 1.8, 1.9, 2, 2.25, 2.5, 2.75, 3, 3.25, 3.5, 3.75, 4, 4.25, 4.5, 4.75, or 5 phr, or a combination of any of the foregoing values, or a range encompassing any of the foregoing values.

### Sulfur

In one aspect, the conductive rubber compositions disclosed herein include sulfur. In another aspect, the sulfur can be present in an amount of from 0.5 to 5 phr, or from 0.5 to 3 phr, or at 0.5, 1, 1.5, 2, 2.5, 3, 3.5, 4, 4.5, or 5 phr, or a combination of any of the foregoing values, or a range encompassing any of the foregoing values. In one aspect, the sulfur is present in an amount of 1.8 phr. In one aspect, sulfur can be useful for forming crosslinks between rubber chains during the vulcanization process.

### Accelerator

In an aspect, the conductive rubber compositions include an accelerator. In one aspect, the accelerator can be a sulfenamide sulfur cure accelerator. In another aspect, the accelerator is present in an amount of from 0.5 to 5 phr, or from 1 to 2 phr, or at 0.5, 1, 1.5, 2, 2.5, 3, 3.5, 4, 4.5, or 5 phr, or a combination of any of the foregoing values, or a range encompassing any of the foregoing values. In one aspect, the accelerator is present at 1.2 phr.

### Retarder

In one aspect, the conductive rubber compositions include a retarder. In another aspect, the retarder can be N-(cyclohexylthio)phthalimide. In still another aspect, the retarder can be present in an amount of from 0.05 to 0.5 phr, or from 0.1 phr to 0.3 phr, or at 0.05, 0.1, 0.15, 0.2, 0.25, 0.3, 0.35, 0.4, 0.45, or 0.5 phr, or a combination of any of the foregoing values, or a range encompassing any of the foregoing values.

In one aspect, the retarder can be useful for preventing premature vulcanization during rubber processing. An exemplary retarder can be Vantard PVI (Vanderbilt Chemicals, LLC, Norwalk CT USA).

### Methods for Preparing the Conductive Rubber Compositions

In one aspect, the disclosed conductive rubber compositions can be made by mixing one or more additives into the rubber or polymeric base of the rubber compositions. In a further aspect, heating the rubber or polymeric base of the rubber compositions softens the rubber or polymeric base enough to allow for the mixing of additives into the rubber composition. In still another aspect, the additives are discussed herein and include one or more of an antioxidant or antiozonant, oil, zinc oxide, fatty acid, sulfur, accelerator, retarder, and one or more conductive carbon components.

In one aspect, the additives can be mixed into the rubber compositions sequentially or simultaneously. In some aspects, a masterbatch can be prepared containing nonreactive additives such as the conductive carbon component, to ensure thorough mixing of the conductive carbon component prior to the beginning of vulcanization. In a further aspect, following preparation of the masterbatch, vulcanization additives (e.g., sulfur, zinc oxide) can be added to the masterbatch.

In some aspects, the rubber compositions may further be shaped prior to or during the early stages of vulcanization by a method including, but not limited to, extrusion, calendaring, molding, casting, another rubber processing method, or any combination thereof.

In some aspects, processing aids can be used, such as, for example, waxes including but not limited to microcrystalline and paraffinic waxes, in a range, for example, of from 1 phr to 5 phr, or from 1 phr to 3 phr, or at 1, 2, 3, 4, or 5 phr, or a combination of any of the foregoing values, or a range encompassing any of the foregoing values, if used.

In another aspect, resins, usually as tackifiers, can be incorporated into the rubber compositions where the tackifiers or resins are compounds such as, for example, synthetic hydrocarbon and natural resins in a range of, for example, from 1 phr to 5 phr or from 1 phr to 3 phr, or at 1, 2, 3, 4, or 5 phr, or a combination of any of the foregoing values, or a range encompassing any of the foregoing values, if used.

In some aspects, a curative can be present as sulfur together with one or more sulfur cure accelerator(s). In another aspect, for sulfur and accelerator(s) curatives, the amount of sulfur used can be, for example, from 0.5 phr 5 phr, or from 0.5 to 3 phr, or at 0.5, 1, 1.5, 2, 2.5, 3, 3.5, 4, 4.5, or 5 phr, or a combination of any of the foregoing values, or a range encompassing any of the foregoing values; and the accelerator(s), often of the sulfenamide type, is (are) used in a range of from 0.5 phr to 5 phr, or from 1 phr to 2 phr, or at 0.5, 1, 1.5, 2, 2.5, 3, 3.5, 4, 4.5, or 5 phr, or a combination of any of the foregoing values, or a range encompassing any of the foregoing values.

In still another aspect, components of the compositions, including the elastomers but exclusive of sulfur and accelerator curatives, are normally first mixed together in a series of at least two sequential mixing stages, although sometimes one mixing stage might be used, to a temperature in a range of, for example, 145°C to 185°C, or at 145, 150, 155, 160, 165, 170, 175, 180, or 185°C, or a combination of any of the foregoing values, or a range encompassing any of the foregoing values, and such mixing stages are typically referred to as non-productive mixing stages. In a further aspect, the sulfur and accelerators, and optionally one or more retarders and optionally one or more antidegradants, are mixed therewith to a temperature of, for example, from 90°C to 120°C, or at 90, 95, 100, 105, 110, 115, or 120°C, or a combination of any of the foregoing values, or a range encompassing any of the foregoing values, in a second stage that is typically referred as a productive mix stage. Such mixing procedures are well known to those having skill in such art.

### Properties of the Conductive Rubber Compositions

### Uncured Storage Modulus

In one aspect, the disclosed conductive rubber composition can have an uncured storage modulus at 15% train, 100°C, and 0.83 Hz, of from 185 kPa to 1100 kPa, or of 185, 200, 300, 400, 500, 600, 700, 800, 900, 1000, or 1100 kPa, or a combination of any of the foregoing values, or a range encompassing any of the foregoing values. In a further aspect, the uncured storage modulus can be measured using a rubber process analyzer.

### Storage Modulus

In one aspect, the disclosed conductive rubber compositions can have a storage modulus at 1% strain, 100°C, and 11 Hz of from 1.1 MPa to 4 MPa, or of 1.1, 1.5, 2, 2.5, 3, 3.5, or 4 MPa, or a combination of any of the foregoing values, or a range encompassing any of the foregoing values.

In one aspect, the disclosed conductive rubber compositions can have a storage modulus at 10% strain, 100°C, and 11 Hz of from 0.8 MPa to 3 MPa, or of 0.8, 1, 1.2, 1.4, 1.6, 1.8, 2, 2.2, 2.4, 2.6, 2.8, or 3 MPa, or a combination of any of the foregoing values, or a range encompassing any of the foregoing values.

In one aspect, the disclosed conductive rubber compositions can have a storage modulus at 50% strain, 100°C, and 11 Hz of from 0.35 MPa to 1 MPa, or of 0.35, 0.4, 0.5, 0.6, 0.7, 0.8, 0.9, or 1 MPa, or a combination of any of the foregoing values, or a range encompassing any of the foregoing values.

In any of these aspects, storage modulus can be measured using a rubber process analyzer.

### Modulus

In an aspect, the disclosed conductive rubber compositions can have a 10% modulus of from 0.4 MPa to 2.5 MPa, or of 0.4, 0.5, 1, 1.5, 2, or 2.5 MPa, or a combination of any of the foregoing values, or a range encompassing any of the foregoing values.

In another aspect, the disclosed conductive rubber compositions can have a 50% modulus of from 1.25 MPa to 3.5 MPa, or of 1.25, 1.5, 2, 2.5, 3, or 3.5 MPa, or a combination of any of the foregoing values, or a range encompassing any of the foregoing values.

In still another aspect, the disclosed conductive rubber compositions can have a 100% modulus of from 2 MPa to 5.2 MPa, or of 2, 2.5, 3, 3.5, 4, 4.5, 5, or 5.2 MPa, or a combination of any of the foregoing values, or a range encompassing any of the foregoing values.

In one aspect, the disclosed conductive rubber compositions can have a 200% modulus of from 3 MPa to 12 MPa, or of 3, 4, 5, 6, 7, 8, 9, 10, 11, or 12 MPa, or a combination of any of the foregoing values, or a range encompassing any of the foregoing values.

In an aspect, the disclosed conductive rubber compositions can have a 300% modulus of from 4 MPa to 13.5 MPa, or of 4, 5, 6, 7, 8, 9, 10, 11, 12, 13, or 13.5 MPa, or a combination of any of the foregoing values, or a range encompassing any of the foregoing values.

In any of these aspects, the modulus can be measured using a tensile test based on ASTM D 412.

### Tensile Strength

In one aspect, the conductive rubber compositions disclosed herein can have a tensile strength of above 2 MPa, or of from 2 MPa to 30 MPa, or of 2, 2.5, 3, 3.5, 4, 4.5, 5, 10, 15, 20, 25, or 30 MPa, or a combination of any of the foregoing values, or a range encompassing any of the foregoing values. In one aspect, tensile strength can be measured using a tensile test based on ASTM D 412.

### Elongation at Break

In one aspect, the conductive rubber compositions disclosed herein can have an elongation at break of above 200%, or of from 200% to 800%, or of 200, 250, 300, 350, 400, 450, 500, 550, 600, 650, 700, 750, or 800%, or a combination of any of the foregoing values, or a range encompassing any of the foregoing values. In one aspect, elongation at break can be measured using a tensile test based on ASTM D 412.

### Cured or Uncured Electrical Resistance

In one aspect, the conductive rubber compositions disclosed herein can be formed into a wire. In another aspect, the wire can be 254 mm long and 2 mm in diameter. In a further aspect, such a wire can have a cured or uncured electrical resistance at 23°C of from 5 ohms (Ω) to 10 megaohms (MΩ), or from 5 Ω to an upper limit of 100 kiloohms (kf2), or of 5, 25 Ω, 50 Ω, 75 Ω, 100 Ω, 200 Ω, 300 Ω, 400 Ω, 500 Ω, 600 Ω, 700 Ω, 800 Ω, or 900 Ω, or 1 kΩ, 5 kΩ, 10 kΩ, 20 kΩ, 30 kΩ, 40 kΩ, 50 kΩ, 60 kΩ, 70 kΩ, 80 kΩ, 90 kΩ, 100 kΩ, 200 kΩ, 300 kΩ, 400 kΩ, 500 kΩ, 600 kΩ, 700 kΩ, 800 kΩ, or 900 kΩ, or 1 MΩ, 2 MΩ, 3 MΩ, 4 MΩ, 5 MΩ, 6 MΩ, 7 MΩ, 8 MΩ, 9 MΩ, or 10 MΩ, or a combination of any of the foregoing values, or a range encompassing any of the foregoing values. In one aspect, electrical resistance can be measured using a standard multimeter. In another aspect, the conductive rubber compositions have a resistivity of less than 800 Ω·m, or 10, 50, 100, 150, 200, 250, 300, 350, 400, 450, 500, 550, 600, 650, 700, 750, or 800 Ω·m, or a combination of any of the foregoing values, or a range encompassing any of the foregoing values.

In an aspect, conductivity and/or resistance of the conductive rubbers is enhanced in the disclosed compositions when the surface area, particle size, and structure (e.g. porosity) of the carbon component are higher.

### T25 and T90

In an aspect, the conductive rubber compositions disclosed herein can have a T25 as measured using a moving die rheometer standard test at 150°C for 60 min of from 1 min to 30 min, or of 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 min, or a combination of any of the foregoing values, or a range encompassing any of the foregoing values.

In another aspect, the conductive rubber compositions disclosed herein can have a T90 as measured using a moving die rheometer standard test at 150°C for 60 min of from 5 min to 60 min, or of 5, 10, 15, 20, 25, 30, 35, 40, 45, 50, 55, or 60 min, or a combination of any of the foregoing values, or a range encompassing any of the foregoing values.

In one aspect, T25 and T90 can be measured using a rubber process analyzer and/or a moving die rheometer standard test (using ASTM D 5289 and/or ISO 6502).

### Zwick Rebound

In one aspect, the conductive rubber compositions can have a Zwick rebound at 23°C of from 30 to 60, or of 30, 35, 40, 45, 50, 55, or 60, or a combination of any of the foregoing values, or a range encompassing any of the foregoing values.

In another aspect, the conductive rubber compositions can have a Zwick rebound at 100°C of from 45 to 75, or of 45, 50, 55, 60, 65, 70, or 75, or a combination of any of the foregoing values, or a range encompassing any of the foregoing values.

In one aspect, Zwick rebound can be measured using standard test methods DIN 53512 for elastomers and rubber, ISO 4662 for rubber, or BS 903.

### Final Torque

In an aspect, the disclosed conductive rubber compositions have a final torque measured at 150°C for 60 min of from 10 dN·m to 45 dN·m, or of 10, 15, 20, 25, 30, 35, 40, or 45 dN·m, or a combination of any of the foregoing values, or a range encompassing any of the foregoing values. In one aspect, final torque can be measured using a moving die rheometer to perform testing according to ASTM D 5289 and/or ISO 6502.

### 2 Point Reversion Time

In one aspect, the disclosed conductive rubber compositions have a 2 point reversion time measured at 150°C for 60 minutes of from 0.1 min to 40 min, or of 0.1, 0.5, 1, 5, 10, 15, 20, 25, 30, 35, or 40 min, or a combination of any of the foregoing values, or a range encompassing any of the foregoing values. In one aspect, 2 point reversion time can be measured using a moving die rheometer to perform testing according to ASTM D 5289 and/or ISO 6502.

Exemplary methods for evaluating the properties of the disclosed conductive rubbers are provided in the Examples.

### Articles Including the Conductive Rubber Compositions

In one aspect, provided herein is an article including the conductive rubber compositions disclosed herein. In another aspect, the article can be a tire, a tire chimney, a wire, a sensor, a hose, an electromagnetic interference shielding gasket, a weather sealing material, an adhesive, or any combination thereof. The conductive rubber compositions described herein possess excellent electrical resistance properties while using lower amounts of the carbon component. The compositions also possess good mechanical properties, which reduces the degradation rate of the articles made therefrom (e.g., tire). Thus, the articles incorporating the conductive compositions described herein possess good electrical and mechanical properties.

Many modifications and other embodiments disclosed herein will come to mind to one skilled in the art to which the disclosed compositions and methods pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. The skilled artisan will recognize many variants and adaptations of the aspects described herein. These variants and adaptations are intended to be included in the teachings of this disclosure and to be encompassed by the claims herein.

### EXAMPLES

Unless indicated otherwise, parts are parts by weight, temperature is in C or is at ambient temperature, and pressure is at or near atmospheric.

### Example 1: Property Analysis and Characterization Procedures

Mooney Viscosity ML (for a large rotor) or MS (for a small rotor) was determined at 100°C using standard test method ASTM D 1646.

A Rubber Process Analyzer (RPA) was used to determine the following: uncured storage modulus G' at 15% strain, 100°C and 0.83 Hz; T25; T90; Storage Modulus G' (1%, 10%, and 50%) at 100°C and 11 Hz; and Tan Delta (10%) at 100°C and 1 Hz.

A Moving Die Rheometer (MDR) Standard Test Method for Rubber Property Vulcanization Using Rotorless Cure Meters based on standard test methods ASTM D 5289 and ISO 6502 was used to measure maximum and minimum torque, delta torque, final torque, time for 1 pt rise, T25, T90, and 2 pt reversion. The test was conducted at 150°C for 60 min.

A tensile test (Die C) at 23°C based on standard test method ASTM D 412 was used to measure 10%, 50%, 100%, 200%, and 300% modulus, tensile strength, and elongation at break.

External surface area based on statistical thickness method (STSA) is measured according to standard test method ASTM D 6556.

A Fluke 117 True RMS Multimeter was used to measure electrical resistance of uncured rubber wires at 23°C. A typical wire used for the test was 254 mm long and 2 mm in diameter. In this test, a result of "OL" indicates an opened line where resistance cannot be measured.

Zwick rebound at 23°C and 100°C was measured using standard test method DIN 53512 for elastomers and rubber, ISO 4662 (for rubber), and/or BS 903.

The Glass transition temperature Tg for polymers is determined as a peak midpoint by a differential scanning calorimeter (DSC) at a temperature rate of increase of 10°C per minute, according to ASTM D3418-15 or equivalent.

Molecular weight refers to the true molecular weight in g/mol of a polymer (copolymer or block of a copolymer). It is measured with gel permeation chromatography (GPC) using polystyrene calibration standards according to ASTM 5296-11 or equivalent. Mn (number average molecular weight), Mw (weight average molecular weight) and Mz (z average molecular weight) can be suitably determined together using said gel permeation chromatography (GPC) according to ASTM 5296-11 using polystyrene calibration standards (for further explanations, please see ASTM 5296-11 and/or Saviour A. Umoren and Moses M. Solomon, Polymer Characterization: Polymer Molecular Weight Distribution, March 2016, in Polymer Science, pages 412-419, in particular and sections 2 and 3.3.1).

### Example 2: Exemplary Compositions and Properties Thereof

Exemplary conductive rubber compositions using carbon black as the conductive carbon compound are provided in Table 1.

| **Table 1: Exemplary Conductive Rubber Compositions^{a}** | | | | | | |
|---|---|---|---|---|---|---|
| **Component** | **Control A** | **Conductive Rubber Composition** | | | | |
| | | **#1** | **#2** | **#3** | **#4** | **#5** |
| TSR20 Natural Rubber^{b} | 100 | | | | | |
| RSS Natural Rubber^{c} | | 100 | | | | |
| Natsyn2200^{d} | | | 100 | | | |
| PLF1502^{e} | | | | 100 | | |
| Exp SBR^{f} | | | | | 100 | 100 |
| Carbon Black A^{g} | 40 | | | | | |
| Carbon Black C^{h} | | 50 | 50 | 50 | 50 | 80 |
| Antioxidants | 1 | 2 | 2 | 2 | 2 | 2 |
| Oilⁱ | 4 | 20 | 20 | 20 | 20 | 30 |
| Zinc Oxide | 3 | 3 | 3 | 3 | 3 | 3 |
| Fatty Acid^{j} | 2 | 2 | 2 | 2 | 2 | 2 |
| Sulfur | 1.8 | 1.8 | 1.8 | 1.8 | 1.8 | 1.8 |
| Accelerator(s)^{k} | 1.2 | 1.2 | 1.2 | 1.2 | 1.2 | 1.2 |
| Retarder | 0.1 | 0.1 | 0.1 | 0.2 | 0.2 | 0.2 |

| | | | | | | |
|---|---|---|---|---|---|---|
| ^{a}All amounts provided in units of parts per hundred rubber (phr). ^{b}TSR20 Natural Rubber consists primarily of cis-1,4-polyisoprene and has a T_{g} of -70°C with 20% max Dirt. ^{c}RSS Natural Rubber is a #2 Ribbed Smoked Sheet (#2 RSS) Natural Rubber with T_{g} of -70°C. ^{d}Natsyn2200 is synthetic cis-1,4-polyisoprene with a T_{g} of -64°C. ^{e}PLF1502 is an emulsion polymerization of styrene-butadiene rubber having 23.5% styrene, 12% vinyl, 55% trans, 10% cis, and T_{g} of -55°C. ^{f}Exp SBR is an experimental Li-solution SBR with T_{g} of -26°C. ^{g}Carbon Black A is an N299 ASTM grade carbon black. ^{h}Carbon Black C is commercially available from Orion Engineered Carbons as PRINTEX XE2B. ⁱThe oil is a standard rubber processing oil. ^{j}The fatty acid is a mixture of stearic acid, palmitic acid, and oleic acid. ^{k}The accelerator is a sulfenamide sulfur cure accelerator. | | | | | | |

Properties of the compositions using carbon black as the conductive carbon compound are provided in Table 2.

| **Table 2: Properties of Exemplary Conductive Rubber Compositions** | | | | | | | |
|---|---|---|---|---|---|---|---|
| **Property** | **Units** | **Control A** | **Conductive Rubber Composition** | | | | |
| | | | **#1** | **#2** | **#3** | **#4** | **#5** |
| Mooney Viscosity ML | | 99.2 | | 75 | 50 | 2.63 | 2.63 |
| Mooney Viscosity MS | | | 142 | | | | |
| Uncured Storage Modulus (G') at 15% Strain, 100°C, 0.83 Hz | kPa | 187 | 527 | 488 | 584 | 358 | 1099 |
| T25 | min | 1.43 | 0.99 | 0.91 | 0.91 | 0.09 | 0.82 |
| T25 | Min | 1.82 | 6.11 | 7.93 | 4.88 | 1.15 | 2.17 |
| T90 | Min | 2.17 | 19.32 | 21.99 | 27.57 | 27.85 | 21.74 |
| Storage Modulus (G'), 1%, at | MPa | 1.17 | 3.18 | 3.67 | 3.66 | 3.40 | 1.16 |
| 100°C, 11 Hz | | | | | | | |
| Storage Modulus (G'), 10%, at 100°C, 11 Hz | MPa | 0.82 | 1.82 | 1.90 | 1.65 | 1.05 | 2.55 |
| Storage Modulus (G'), 50%, at 100°C, 11 Hz | MPa | 0.55 | 0.97 | 0.94 | 0.74 | 0.35 | 0.65 |
| Tan Delta (10%) at 100°C, 1 Hz | | 0.13 | 0.16 | 0.19 | 0.29 | 0.54 | 0.73 |
| Max Torque | dN·m | 16.95 | 23.93 | 26.97 | 28.99 | 19.36 | 41.62 |
| Min Torque | dN·m | 2.39 | 7.61 | 8.76 | 9.11 | 7.37 | 26.87 |
| Delta Torque | dN·m | 14.56 | 16.32 | 18.21 | 19.88 | 11.99 | 14.75 |
| Final Torque | dN·m | 13.78 | 22.37 | 25.8 | 28.99 | 19.35 | 41.62 |
| Time 1 Pt Rise | min | 5.55 | 0.23 | 0.18 | 0.33 | 18.72 | 0.2 |
| T25 | min | 7.21 | 4.79 | 4.11 | 12.18 | 25.46 | 5.1 |
| T90 | min | 10.94 | 18.03 | 20.18 | 42.19 | 52.68 | 48.06 |
| 2 Pt Reversion | min | 39.48 | 0.16 | 0.14 | 0.23 | 11.02 | 0.17 |
| 10% Modulus | MPa | 0.5 | 1.0 | 0.9 | 1.1 | 1.1 | 2.3 |
| 50% Modulus | MPa | 1.3 | 1.8 | 1.6 | 1.7 | 1.6 | 3.5 |
| 100% Modulus | MPa | 2.5 | 2.9 | 2.5 | 2.5 | 2.0 | 4.0 |
| 200% Modulus | MPa | 7.0 | 6.2 | 5.0 | 5.1 | 3.0 | 4.9 |
| 300% Modulus | MPa | 13.2 | 11.1 | 8.3 | 8.6 | 4.0 | 5.8 |
| Tensile Strength | MPa | 26.3 | 18.4 | 16.7 | 21.6 | 4.7 | 6.1 |
| Elongation at Break | % | 490 | 433 | 507 | 591 | 392 | 343 |
| Electrical Resistance at 23°C | kΩ | OL^{a} | 5.5 | 4.0 | 4.1 | 4.0 | 1.3 |

| | | | | | | | |
|---|---|---|---|---|---|---|---|
| ^{a}OL (opened line) indicates measurement could not be completed. | | | | | | | |

Exemplary compositions using a combination of carbon black and a short carbon fiber as the conductive carbon compound are provided in Table 3.

| **Table 3: Exemplary Conductive Rubber Compositions^{a}** | | | | |
|---|---|---|---|---|
| **Component^{b}** | **Control B** | **Conductive Rubber Composition** | | |
| | | **#6** | **#7** | **#8** |
| Natsyn2200^{b} | | | 100 | 100 |
| TSR20 Natural Rubber^{b} | 100 | 100 | | |
| Carbon Black A^{b} | 40 | 30 | | |
| Carbon Black B^{c} | | | 40 | |
| Carbon Black C^{b} | | | | 40 |
| Short Carbon Fiber^{d} | | 40 | 40 | 40 |
| Antioxidants | 1 | 1 | 1 | 1 |
| Oil ^{b} | 4 | 4 | 15 | 22 |
| Zinc Oxide | 3 | 3 | 3 | 3 |
| Fatty Acid ^{b} | 1 | 1 | 1 | 1 |
| Sulfur | 1.8 | 1.8 | 1.8 | 1.8 |
| Accelerator(s) ^{b} | 1.2 | 1.2 | 1.2 | 1.2 |
| Retarder | 0.1 | 0.1 | 0.2 | 0.2 |

| | | | | |
|---|---|---|---|---|
| ^{a}All amounts provided in units of parts per hundred rubber (phr). ^{b}Refer to footnotes to Table 1 for further information on component. ^{c}carbon Black B is commercially available from Cabot Corporation as PROPEL X22. ^{d} Short carbon fiber has a diameter ranging from 150-600 nm and a length of greater than 1 µm. | | | | |

Properties of the compositions using a combination of carbon black and a short carbon fiber as the conductive carbon compound are provided in Table 4.

| **Table 4: Properties of Exemplary Conductive Rubber Compositions** | | | | | |
|---|---|---|---|---|---|
| **Property** | **Units** | **Control B** | **Conductive Rubber Composition** | | |
| | | | **#6** | **#7** | **#8** |
| Uncured Storage Modulus (G') at 15% Strain, 100°C, 0.83 Hz | kPa | 0.187 | 0.313 | 0.248 | 0.596 |
| T25 | min | 1.43 | 1.36 | 1.72 | 1.56 |
| T25 | Min | 1.82 | 1.63 | 2.01 | 2.05 |
| T90 | Min | 2.17 | 1.95 | 2.38 | 2.58 |
| Storage Modulus (G'), 1%, at 100°C, 11 Hz | MPa | 1.174 | 1.673 | 1.977 | 3.973 |
| Storage Modulus (G'), 10%, at 100°C, 11 Hz | MPa | 0.818 | 1.111 | 0.968 | 1.504 |
| Storage Modulus (G'), 50%, at 100°C, 11 Hz | MPa | 0.551 | 0.685 | 0.533 | 0.565 |
| Tan Delta (10%) at 100°C, 1 Hz | | 0.127 | 0.155 | 0.228 | 0.388 |
| Max Torque | dN·m | 16.95 | 19.19 | 26.07 | 19.76 |
| Min Torque | dN·m | 2.39 | 3.12 | 8.61 | 4.26 |
| Delta Torque | dN·m | 14.56 | 16.07 | 17.46 | 15.5 |
| Final Torque | dN·m | 13.78 | 14.74 | 24.25 | 15.73 |
| Time 1 Pt Rise | min | 5.55 | 2.38 | 0.22 | 5.12 |
| T25 | min | 7.21 | 3.86 | 0.99 | 6.69 |
| T90 | min | 10.94 | 7.11 | 14.74 | 11.16 |
| 2 Pt Reversion | min | 39.48 | 27.52 | | 36.03 |
| 23°C Zwick Rebound | | 60 | 55 | 39 | 32 |
| 100°C Zwick Rebound | | 74 | 69 | 57 | 47 |
| 10% Modulus | MPa | 0.46 | 0.71 | 0.59 | 0.81 |
| 50% Modulus | MPa | 1.28 | 2.31 | 1.48 | 1.76 |
| 100% Modulus | MPa | 2.48 | 5.19 | 2.91 | 3.12 |
| 200% Modulus | MPa | 7.02 | 11.56 | 6.43 | 6.43 |
| 300% Modulus | MPa | 13.22 | 17.2 | 10.01 | 10.05 |
| Tensile Strength | MPa | 26.32 | 18.02 | 15.32 | 13.44 |
| Elongation at Break | % | 490 | 318 | 437 | 390 |
| Electrical Resistance at 23°C | kΩ | OL^{a} | 7500 | 130 | 2.6 |

| | | | | | |
|---|---|---|---|---|---|
| ^{a}OL (opened line) indicates measurement could not be completed. | | | | | |

## Claims

1. A tire, comprising a plurality of sidewalls, each one of the sidewalls extending radially outwardly from a respective bead to a tread, the tread comprising a plurality of tread elements; and
(i) a tire component positioned in the tire adjacent to the tread and a chimney extending from the tire component through at least one tread element, **characterised in that**
the tire component and the chimney comprise a rubber composition having an uncured or cured electrical resistance at 23°C less than 10 KΩ when formed into a wire 254 millimeters long and 2 millimeters in diameter; or
(ii) a channel extending from a conductive component of the tire to an outer surface of one of the tread elements and a conductive insert positioned in the channel, wherein a radially outermost surface of the conductive insert is flush with an outer surface of the tread element, and **characterised by** the conductive insert being constructed of a conductive rubber composition having an uncured or cured electrical resistance at 23°C less than 10 KΩ when formed into a wire 254 millimeters long and 2 millimeters in diameter; or
(iii) a conductive component in the tire, the conductive component being positioned radially inward relative to an outer surface of the tread, and one or a plurality of conductive inserts, wherein individual ones of the one or more conductive inserts contact the conductive component of the tire and extend to an outer surface of at least one of the tread elements, and **characterised in that**
the conductive insert is constructed of a conductive rubber composition having an uncured or cured electrical resistance at 23°C less than 10 KΩ when formed into a wire 254 millimeters long and 2 millimeters in diameter; or
(iv) a channel extending from an inside surface of the tire through at least a portion of one of the tread elements and a tread wear plug including a shaft positioned in the channel, wherein a flange extends from a radially innermost end of the shaft; and a conductor embedded in the shaft, the conductor having a pair of ends terminating into a corresponding pair of sensor contacts in the flange, a radially outermost portion of the conductor being positioned at a predefined depth with respect to an outer surface of the tread element, the being **characterised by** comprising a conductive rubber composition having an uncured or cured electrical resistance at 23°C less than 10 KΩ when formed into a wire 254 millimeters long and 2 millimeters in diameter and/or the conductor being constructed from carbon fiber.

2. The tire of claim 1 wherein the tire comprises: a plurality of said channels, wherein individual ones of said channels extend from an inside surface of the tire through at least a portion of a respective one of said tread elements; a plurality of said tread wear plugs, wherein individual ones of said tread wear plugs are positioned in a corresponding one of said channels, the individual ones of said sensors comprising a shaft with a flange, the flange extending from a radially innermost end of the shaft; and a conductor embedded in the shaft, the conductor having a pair of ends terminating into a corresponding pair of sensor contacts in the flange, a radially outermost portion of the conductor being positioned at a predefined depth with respect to an outer surface of the tread element, the conductor comprising a conductive rubber composition having an uncured or cured electrical resistance at 23°C less than 10 KΩ when formed into a wire 254 millimeters long and 2 millimeters in diameter.

3. The tire of claim 1 or 2 wherein the conductor is embedded in a first portion of the shaft and wherein the shaft comprises a second portion positioned at a radially outermost end of the shaft, the second portion being electrically coupled to a conductive element of the tire, the conductor and the second portion comprising said conductive rubber composition having an uncured or cured electrical resistance at 23°C less than 10 KΩ when formed into a wire 254 millimeters long and 2 millimeters in diameter.

4. The tire of at least one of the previous claims, wherein the tire component or the conductive component comprises an undertread of the tire.

5. The tire of at least one of the previous claims, wherein the chimney comprises an annular chimney extending along an entire periphery of the tread and, optionally, wherein a width of the annular chimney is specified to provide for a tire resistance of less than 10 MΩ or less than 1 MΩ; and/or wherein the chimney extends in an annular direction of the tire along at least a portion of the tread.

6. The tire of at least one of the previous claims, wherein the conductive inserts are positioned circumferentially around the tire, and wherein a first angle formed between any two adjacent ones of the conductive inserts and an axis of the tire is less than a second angle formed between a minimum circumferential distance between a pair of outer edges of a footprint falling within a tread of the tire and the axis of the tire.

7. The tire of at least one of the previous claims, wherein the conductive inserts are positioned at even intervals around the circumference of the tire.

8. The tire of at least one of the previous claims, further comprising an electrically active sensor having a pair of electrical contacts, each one of the pair of electrical contacts being in direct contact with a corresponding one of the sensor contacts.

9. The tire of at least one of the previous claims, wherein the channel extends from the inside surface of the tire to a radially outer surface of the one of the tread elements, and wherein a radially outermost surface of the shaft is flush with a radially outer surface of the one of the tread elements.

10. The tire of at least one of the previous claims, wherein a first distance between the channel and a lateral edge of the tread is greater than a second distance between the channel and the equatorial plane of the tread; and/or wherein a distance between the channel and an equatorial plane of the tread is greater than a distance between the channel and a lateral edge of the tread.

11. The tire of at least one of the previous claims, wherein said second portion further comprises a flange extending from a radially innermost end of the second portion and/or wherein a radially outermost surface of the shaft is flush with a radially outer surface of the one of the tread elements.

12. The tire of at least one of the previous claims, wherein the second portion of the shaft provides an electrical pathway from the conductive element of the tire to ground when the tread wear plug falls within a footprint of the tire.

13. The tire of at least one of the previous claims, wherein the channel further comprises a first channel and at least one second channel extending from the conductive component of the tire to the outer surface of a radially outer surface of the one of the tread elements, the at least one conductive insert being disposed in the at least one second channel, and wherein the at least one conductive insert contacting the conducting component of the tire extends to an outer surface of at least one of the tread elements.

14. The tire of claim 13 wherein the at least one second channel comprises a plurality of second channels, wherein the at least one conductive insert comprises a plurality of conductive inserts, and wherein individual ones of the conductive inserts are disposed in a corresponding one of the second channels.

15. A tire tread wear depth sensing system, the system comprising a tread wear plug including a shaft configured to be inserted in a channel extending from an inside surface of a tire through at least a portion of one of a plurality of tread elements of the tire, and a conductor embedded in the shaft, the conductor having a pair of ends terminating into a corresponding pair of sensor contacts in a flange positioned at a first end of the shaft, wherein a portion of the conductor is positioned in the shaft at a predefined distance from a second end of the shaft such that the portion of the conductor is disposed in a sacrificial portion of the tread element of the tire when the shaft is fully inserted into the channel, the being **characterised by** comprising a conductive rubber composition having an uncured or cured electrical resistance at 23°C less than 10 KΩ when formed into a wire 254 millimeters long and 2 millimeters in diameter.

## Patentansprüche

1. Reifen, der eine Vielzahl von Seitenwänden umfasst, wobei jede der Seitenwände sich von einem entsprechenden Wulst radial nach außen zu einer Lauffläche erstreckt, wobei die Lauffläche eine Vielzahl von Laufflächenelementen aufweist; und umfasst:
(i) eine Reifenkomponente, die in dem Reifen angrenzend an die Lauffläche angeordnet ist, und einen Kamin, der sich von der Reifenkomponente durch mindestens ein Laufflächenelement erstreckt, **dadurch gekennzeichnet, dass** die Reifenkomponente und der Kamin eine Kautschukzusammensetzung umfassen, die in dem unvulkanisierten oder vulkanisiertem Zustand einen elektrischen Widerstand bei 23°C von weniger als 10 KΩ aufweist, wenn sie zu einem Draht von 254 mm Länge und 2 mm Durchmesser umgeformt ist; oder
(ii) einen Kanal, der sich von einer leitfähigen Komponente des Reifens zu einer Außenfläche eines der Laufflächenelemente erstreckt, und einen leitfähigen Einsatz, der in dem Kanal angeordnet ist, wobei eine radial äußerste Fläche des leitfähigen Einsatzes mit einer Außenfläche des Laufflächenelements bündig ist, und **dadurch gekennzeichnet, dass** der leitfähige Einsatz aus einer leitfähigen Kautschukzusammensetzung aufgebaut ist, die in dem unvulkanisierten oder vulkanisiertem Zustand einen Widerstand bei 23°C von weniger als 10 KΩ aufweist, wenn sie zu einem Draht von 254 mm Länge und 2 mm Durchmesser umgeformt ist; oder
(iii) eine leitende Komponente in dem Reifen, wobei die leitende Komponente relativ zu einer Außenfläche der Lauffläche radial nach innen positioniert ist, und eine oder eine Vielzahl von leitenden Einsätzen, wobei einzelne der einen oder mehreren leitenden Einsätze die leitende Komponente des Reifens berühren und sich zu einer Außenfläche von mindestens einem der Laufflächenelemente erstrecken, und **dadurch gekennzeichnet, dass** der leitende Einsatz aus einer leitenden Kautschukzusammensetzung aufgebaut ist, die in dem unvulkanisierten oder vulkanisiertem Zustand einen elektrischen Widerstand bei 23°C von weniger als 10 KΩ aufweist, wenn sie zu einem Draht mit einer Länge von 254 Millimetern und einem Durchmesser von 2 Millimetern umgeformt ist; oder
(iv) einen Kanal, der sich von einer Innenfläche des Reifens durch mindestens einen Teil eines der Laufflächenelemente erstreckt, und einen Verschleißstopfen der Lauffläche, der einen in dem Kanal angeordneten Schaft umfasst, wobei sich ein Flansch von einem radial innersten Ende des Schafts erstreckt, und einen in den Schaft eingebetteten Leiter, wobei der Leiter ein Paar Enden aufweist, die in einem entsprechenden Paar Sensorkontakten in dem Flansch enden, wobei ein radial äußerster Abschnitt des Leiters in einer vordefinierten Tiefe in Bezug auf eine Außenfläche des Laufflächenelements positioniert ist, wobei der Leiter **dadurch gekennzeichnet ist, dass** er eine leitfähige Kautschukzusammensetzung umfasst, die in dem unvulkanisierten oder vulkanisiertem Zustand einen elektrischen Widerstand bei 23°C von weniger als 10 KΩ aufweist, wenn sie zu einem Draht mit einer Länge von 254 Millimetern und einem Durchmesser von 2 Millimetern umgeformt ist, und/oder der Leiter aus Kohlenstofffaser hergestellt ist.

2. Reifen nach Anspruch 1, wobei der Reifen umfasst:
eine Vielzahl der Kanäle, wobei einzelne der oben genannten Kanäle sich von einer Innenfläche des Reifens durch mindestens einen Teil eines jeweiligen der oben genannten Laufflächenelemente erstrecken;
eine Vielzahl der oben genannten Verschleißstopfen der Lauffläche, wobei einzelne der oben genannten Verschleißstopfen der Lauffläche in einem entsprechenden Kanal unter den oben genannten Kanälen positioniert sind, wobei die einzelnen der oben genannten Sensoren einen Schaft mit einem Flansch umfassen, wobei der Flansch sich von einem radial innersten Ende des Schafts erstreckt; und einen in den Schaft eingebetteten Leiter, wobei der Leiter ein Paar Enden aufweist, die in einem entsprechenden Paar Sensorkontakte in dem Flansch enden, wobei ein radial äußerster Abschnitt des Leiters in einer vordefinierten Tiefe in Bezug auf eine Außenfläche des Laufflächenelements positioniert ist, wobei der Leiter eine leitfähige Kautschukzusammensetzung umfasst, die in dem unvulkanisierten oder vulkanisiertem Zustand einen elektrischen Widerstand bei 23°C von weniger als 10 KΩ aufweist, wenn sie zu einem Draht mit einer Länge von 254 Millimetern und einem Durchmesser von 2 Millimetern umgeformt ist.

3. Reifen nach Anspruch 1 oder 2, wobei der Leiter in einen ersten Abschnitt des Schafts eingebettet ist und der Schaft einen zweiten Abschnitt umfasst, der an einem radial äußersten Ende des Schafts angeordnet ist, wobei der zweite Abschnitt elektrisch mit einem leitenden Element des Reifens verbunden ist, wobei der Leiter und der zweite Abschnitt die oben genannte leitende Kautschukzusammensetzung umfassen, die in dem unvulkanisierten oder vulkanisiertem Zustand einen elektrischen Widerstand bei 23 °C von weniger als 10 KΩ aufweist, wenn sie zu einem Draht von 254 mm Länge und 2 mm Durchmesser umgeformt ist.

4. Reifen nach mindestens einem der vorhergehenden Ansprüche, wobei die Reifenkomponente oder die leitende Komponente ein Protektorunterteil des Reifens umfasst.

5. Reifen nach mindestens einem der vorhergehenden Ansprüche, wobei der Kamin einen ringförmigen Kamin umfasst, der sich entlang des gesamten Umfangs der Lauffläche erstreckt, und wobei optional die Breite des ringförmigen Kamins so spezifiziert ist, dass ein Reifenwiderstand von weniger als 10 KΩ oder weniger als 1 KΩ erreicht wird; und/oder wobei der Kamin sich in einer ringförmigen Richtung des Reifens entlang mindestens eines Teils der Lauffläche erstreckt.

6. Reifen nach mindestens einem der vorhergehenden Ansprüche, wobei die leitenden Einsätze in Umfangsrichtung um den Reifen herum angeordnet sind und wobei ein erster Winkel, der zwischen zwei beliebigen Einsätze unter den benachbarten leitenden Einsätzen und einer Achse des Reifens gebildet wird, kleiner ist als ein zweiter Winkel, der zwischen einem minimalen Umfangsabstand zwischen einem Paar äußerer Kanten einer Aufstandsfläche, die in eine Lauffläche des Reifens fällt, und der Achse des Reifens gebildet wird.

7. Reifen nach mindestens einem der vorhergehenden Ansprüche, wobei die leitenden Einsätze in gleichmäßigen Abständen um den Umfang des Reifens herum angeordnet sind.

8. Reifen nach mindestens einem der vorhergehenden Ansprüche, der außerdem einen elektrisch aktiven Sensor mit einem Paar elektrischer Kontakte umfasst, wobei jeder der beiden elektrischen Kontakte in direktem Kontakt mit einem entsprechenden Sensorkontakt steht.

9. Reifen nach mindestens einem der vorhergehenden Ansprüche, wobei der Kanal sich von der Innenfläche des Reifens zu einer radial äußeren Oberfläche des einen der Laufflächenelemente erstreckt und wobei eine radial äußerste Oberfläche des Schafts mit einer radial äußeren Oberfläche des einen der Laufflächenelemente bündig ist.

10. Reifen nach mindestens einem der vorhergehenden Ansprüche, wobei ein erster Abstand zwischen dem Kanal und einer Seitenkante der Lauffläche größer ist als ein zweiter Abstand zwischen dem Kanal und der Äquatorialebene der Lauffläche; und/oder wobei ein Abstand zwischen dem Kanal und einer Äquatorialebene der Lauffläche größer ist als ein Abstand zwischen dem Kanal und einer Seitenkante der Lauffläche.

11. Reifen nach mindestens einem der vorhergehenden Ansprüche, wobei der zweite Abschnitt ferner einen Flansch umfasst, der sich von einem radial innersten Ende des zweiten Abschnitts aus erstreckt, und/oder wobei eine radial äußerste Oberfläche des Schafts mit einer radial äußeren Oberfläche des einen der Laufflächenelemente bündig ist.

12. Reifen nach mindestens einem der vorhergehenden Ansprüche, wobei der zweite Teil des Schafts einen elektrischen Pfad von dem leitenden Element des Reifens zur Erde bereitstellt, wenn der Verschleißstopfen der Lauffläche in eine Aufstandsfläche des Reifens fällt.

13. Reifen nach mindestens einem der vorhergehenden Ansprüche, wobei der Kanal ferner einen ersten Kanal und mindestens einen zweiten Kanal umfasst, der sich von der leitenden Komponente des Reifens zu der Außenfläche einer radial äußeren Oberfläche des einen der Laufflächenelemente erstreckt, wobei der mindestens eine leitende Einsatz in dem mindestens einen zweiten Kanal angeordnet ist und wobei der mindestens eine leitende Einsatz, der die leitende Komponente des Reifens berührt, sich zu einer Außenfläche von mindestens einem der Laufflächenelemente erstreckt.

14. Reifen nach Anspruch 13, wobei der mindestens eine zweite Kanal eine Vielzahl von zweiten Kanälen umfasst, wobei der mindestens eine leitende Einsatz eine Vielzahl von leitenden Einsätzen umfasst, und wobei einzelne der leitenden Einsätze in einem entsprechenden Kanal unter den zweiten Kanälen angeordnet sind.

15. System zum Erfassen der Verschleißtiefe der Lauffläche eines Reifens, wobei das System einen Verschleißstopfen der Lauffläche, der einen Schaft umfasst, der so konfiguriert ist, dass er in einen Kanal eingeführt werden kann, der sich von einer Innenfläche eines Reifens durch mindestens einen Abschnitt eines einer Vielzahl von Laufflächenelementen des Reifens erstreckt, und einen in den Schaft eingebetteten Leiter umfasst, wobei der Leiter ein Paar von Enden aufweist, die in einem entsprechenden Paar von Sensorkontakten in einem Flansch enden, der an einem ersten Ende des Schafts angeordnet ist, wobei ein Abschnitt des Leiters in dem Schaft in einem vordefinierten Abstand von einem zweiten Ende des Schafts positioniert ist, so dass der Abschnitt des Leiters in einem Opferabschnitt des Laufflächenelements des Reifens angeordnet ist, wenn der Schaft vollständig in den Kanal eingeführt ist, wobei der Leiter **dadurch gekennzeichnet ist, dass** er eine leitfähige Kautschukzusammensetzung umfasst, die in dem unvulkanisierten oder vulkanisiertem Zustand einen elektrischen Widerstand bei 23°C von weniger als 10 KΩ aufweist, wenn sie zu einem Draht mit einer Länge von 254 Millimetern und einem Durchmesser von 2 Millimetern umgeformt ist.

## Revendications

1. Bandage pneumatique qui comprend un certain nombre de flancs, chacun des flancs s'étendant vers l'extérieur, dans la direction radiale, à partir d'un talon respectif jusqu'à une bande de roulement, la bande de roulement comprenant un certain nombre d'éléments de bande de roulement ; et
(i) un composant de bandage pneumatique qui est disposé dans le bandage pneumatique en position adjacente à la bande de roulement et une cheminée qui s'étend à partir du composant de bandage pneumatique à travers au moins un élément de bande de roulement ; **caractérisé en ce que** le composant de bandage pneumatique et la cheminée comprennent une composition de caoutchouc qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm ; ou
(ii) un canal qui s'étend à partir d'un composant conducteur du bandage pneumatique jusqu'à une surface externe d'un des éléments de bande de roulement et un insert conducteur qui est disposé dans le canal ; dans lequel une surface de l'insert conducteur, la plus externe dans la direction radiale, est disposée à fleur avec une surface externe de l'élément de bande de roulement ; et **caractérisé par le fait que** l'insert conducteur est réalisé à partir d'une composition de caoutchouc conductrice qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm ; ou
(iii) un composant conducteur dans le bandage pneumatique, le composant conducteur étant disposé à l'intérieur, dans la direction radiale, par rapport à une surface externe de la bande de roulement, et un ou plusieurs inserts conducteurs ; dans lequel des inserts individuels parmi lesdits un ou plusieurs inserts conducteurs entrent en contact avec le composant conducteur du bandage pneumatique et s'étendent jusqu'à une surface externe d'au moins un des éléments de bande de roulement ; et **caractérisé en ce que** l'insert conducteur est réalisé à partir d'une composition de caoutchouc conductrice qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm ; ou
(iv) un canal qui s'étend à partir d'une surface interne du bandage pneumatique à travers au moins une portion d'un des éléments de bande de roulement et une cheville indicatrice de l'usure de la bande de roulement, qui englobe une tige disposée dans le canal ; dans lequel une bride s'étend à partir d'une extrémité la plus interne, dans la direction radiale, de la tige ; et un conducteur incorporé dans la tige, le conducteur possédant une paire d'extrémités qui se terminent en une paire correspondante de contacts faisant office de capteurs dans la bride, une portion la plus externe, dans la direction radiale, du conducteur étant disposée à une profondeur prédéfinie par rapport à une surface externe de l'élément de bande de roulement, le conducteur étant **caractérisé par le fait qu'**il comprend une composition de caoutchouc conductrice qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm et/ou par **le fait que** le conducteur est réalisé à partir de fibres de carbone.

2. Bandage pneumatique selon la revendication 1, dans lequel le bandage pneumatique comprend : un certains nombre desdits canaux ; dans lequel des canaux individuels parmi lesdits canaux s'étendent à partir d'une surface interne du bandage pneumatique à travers au moins une portion d'un élément de bande de roulement respectif parmi lesdits éléments de bande de roulement ; un certain nombre desdites chevilles indicatrices de l'usure de la bande de roulement ; dans lequel des chevilles individuelles parmi lesdites chevilles indicatrices de l'usure de la bande de roulement sont disposées dans un canal correspondant parmi lesdits canaux ; dans lequel des capteurs individuels parmi lesdits capteurs comprennent une tige munie d'une bride, la bride s'étendant à partir d'une extrémité la plus interne, dans la direction radiale, de la tige ; et un conducteur encastré dans la tige, le conducteur possédant une paire d'extrémités qui se terminent en une paire correspondante de contacts faisant office de capteurs dans la bride, une portion la plus externe, dans la direction radiale, du conducteur étant disposée à une profondeur prédéfinie par rapport à une surface externe de l'élément de bande de roulement, le conducteur comprenant une composition de caoutchouc conductrice qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm.

3. Bandage pneumatique selon la revendication 1 ou 2, dans lequel le conducteur est encastré dans une première portion de la tige et dans lequel la tige comprend une deuxième portion qui est disposée à une extrémité la plus externe, dans la direction radiale, de la tige, la deuxième portion étend couplée par voie électrique à un élément conducteur du bandage pneumatique, le conducteur et la deuxième portion comprenant ladite composition de caoutchouc conductrice qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm.

4. Bandage pneumatique selon au moins une des revendications précédentes, dans lequel le composant de bandage pneumatique ou le composant conducteur comprend une sous-sculpture du bandage pneumatique.

5. Bandage pneumatique selon au moins une des revendications précédentes, dans lequel la cheminée comprend une cheminée annulaire qui s'étend sur une périphérie entière de la bande de roulement et, de manière facultative, dans lequel une largeur de la cheminée annulaire est spécifiée pour procurer une résistance du bandage pneumatique qui est inférieure à 10 KΩ, ou inférieure à 1 KΩ ; et/ou dans lequel la cheminée s'étend dans une direction annulaire du bandage pneumatique sur au moins une portion de la bande de roulement.

6. Bandage pneumatique selon au moins une des revendications précédentes, dans lequel les inserts conducteurs sont disposés dans une position circonférentielle autour du bandage pneumatique ; et dans lequel un premier angle formé entre deux inserts adjacents quelconques parmi les inserts conducteurs et un axe du bandage pneumatique est inférieur à un deuxième angle formé entre une distance circonférentielle minimale entre une paire de bords externes d'une empreinte qui se retrouve au sein d'une bande de roulement du bandage pneumatique et l'axe du bandage pneumatique.

7. Bandage pneumatique selon au moins une des revendications précédentes, dans lequel les inserts conducteurs sont disposés à des intervalles réguliers autour de la circonférence du bandage pneumatique.

8. Bandage pneumatique selon au moins une des revendications précédentes, qui comprend en outre un capteur électriquement actif qui possède une paire de contacts électriques, chacun des contacts électriques parmi la paire de contacts électriques étant mis en contact direct avec un contact parmi les contacts faisant office de capteurs.

9. Bandage pneumatique selon au moins une des revendications précédentes, dans lequel le canal s'étend à partir de la surface interne du bandage pneumatique jusqu'à une surface externe, dans la direction radiale, dudit un élément de bande de roulement parmi les éléments de bande de roulement ; et dans lequel une surface la plus externe, dans la direction radiale, de la tige est disposée à fleur avec une surface externe, dans la direction radiale, dudit un élément parmi les éléments de bande de roulement.

10. Bandage pneumatique selon au moins une des revendications précédentes, dans lequel une première distance entre le canal et un bord latéral de la bande de roulement est supérieure à une deuxième distance entre le canal et le plan équatorial de la bande de roulement ; et/ou dans lequel une distance entre le canal et un plan équatorial de la bande de roulement est supérieure à une distance entre le canal et un bord latéral de la bande de roulement.

11. Bandage pneumatique selon au moins une des revendications précédentes, dans lequel ladite deuxième portion comprend en outre une bride qui s'étend à partir d'une extrémité la plus interne, dans la direction radiale, de la deuxième portion ; et/ou dans lequel une surface la plus externe, dans la direction radiale, de la tige est disposée à fleur avec une surface externe, dans la direction radiale, dudit un élément parmi les éléments de bande de roulement.

12. Bandage pneumatique selon au moins une des revendications précédentes, dans lequel ladite deuxième portion de la tige procure un chemin électrique à partir de l'élément conducteur du bandage pneumatique jusqu'au sol lorsque la cheville qui indique l'usure de la bande de roulement se retrouve au sein d'une empreinte du bandage pneumatique.

13. Bandage pneumatique selon au moins une des revendications précédentes, dans lequel le canal comprend en outre un premier canal et au moins un deuxième canal qui s'étend à partir du composant conducteur du bandage pneumatique jusqu'à la surface externe d'une surface externe, dans la direction radiale, d'un élément parmi les éléments de bande de roulement, ledit au moins un insert conducteur étant disposé dans ledit au moins un deuxième canal ; et dans lequel ledit au moins un insert conducteur qui entre en contact avec le composant conducteur du bandage pneumatique s'étend jusqu'à une surface externe d'au moins un des éléments de bande de roulement.

14. Bandage pneumatique selon la revendication 13, dans lequel ledit au moins un deuxième canal comprend un certain nombre de deuxièmes canaux ; dans lequel ledit au moins un insert conducteur comprend un certain nombre d'inserts conducteurs ; et dans lequel des inserts conducteurs individuels parmi les inserts conducteurs sont disposés dans un deuxième canal correspondant parmi les deuxièmes canaux.

15. Système de détection de la profondeur d'usure de la bande de roulement, le système comprenant une cheville qui indique l'usure de la bande de roulement englobant une tige configurée pour venir s'insérer dans un canal qui s'étend à partir d'une surface interne d'un bandage pneumatique à travers au moins une portion d'un élément de bande de roulement parmi un certain nombre d'éléments de bande de roulement du bandage pneumatique, et un conducteur encastré dans la tige, le conducteur possédant une paire d'extrémités qui se terminent en une paire correspondante de contacts faisant office de capteurs dans une bride qui est disposée à une première extrémité de la tige ; dans lequel une portion du conducteur est disposée dans la tige à une distance prédéfinie par rapport à une deuxième extrémité de la tige d'une manière telle que la portion du conducteur est disposée dans une portion sacrificielle de l'élément de bande de roulement du bandage pneumatique, lorsque la tige est complètement insérée dans le canal, le conducteur étant **caractérisé par le fait qu'**il comprend une composition de caoutchouc conductrice qui possède une résistance électrique à l'état non vulcanisé ou à l'état vulcanisé à 23 °C qui est inférieure à 10 KΩ, lorsqu'elle a été transformée en un fil métallique possédant une longueur de 254 mm et un diamètre de 2 mm.
